(19) Europäisches Patentamt
European Patent Office
Office européen des brevets

(11) **EP 3 656 047 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(21) Anmeldenummer: **18737881.5**

(22) Anmeldetag: **04.07.2018**

(51) Int Cl.:
**H02M 3/337** (2006.01)     **H02M 1/00** (2006.01)

(86) Internationale Anmeldenummer:
**PCT/EP2018/068145**

(87) Internationale Veröffentlichungsnummer:
**WO 2019/015971 (24.01.2019 Gazette 2019/04)**

(54) **SPANNUNGSWANDLERSCHALTUNG UND VERFAHREN ZUM BETRIEB EINER SPANNUNGSWANDLERSCHALTUNG**

VOLTAGE CONVERTER CIRCUIT, AND METHOD FOR OPERATING A VOLTAGE CONVERTER CIRCUIT

CIRCUIT CONVERTISSEUR DE TENSION ET PROCÉDÉ SERVANT À FAIRE FONCTIONNER UN CIRCUIT CONVERTISSEUR DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2017 DE 102017116416**

(43) Veröffentlichungstag der Anmeldung:
**27.05.2020 Patentblatt 2020/22**

(73) Patentinhaber: **Fraunhofer-Gesellschaft zur Förderung der angewandten Forschung e.V.**
**80686 München (DE)**

(72) Erfinder:
• **ENDRES, Stefan**
  **91058 Erlangen (DE)**
• **DITZE, Stefan**
  **91056 Erlangen (DE)**

(74) Vertreter: **Burger, Markus et al Schoppe, Zimmermann, Stöckeler Zinkler, Schenk & Partner mbB Patentanwälte Radlkoferstraße 2 81373 München (DE)**

(56) Entgegenhaltungen:
**US-A1- 2009 146 619**

• **JEVGENI SHKLOVSKI ET AL: "Indirect Power Factor Correction Method and Corresponding Sensorless Switch-Mode Resonant AC/DC Converter", IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 2378-2383, XP031077426, ISBN: 978-1-4244-0135-2**
• **CANALES F ET AL: "A high-power-density DC/DC converter for high-power distributed power systems", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, Bd. 1, 15. Juni 2003 (2003-06-15), Seiten 11-18, XP010648855, DOI: 10.1109/PESC.2003.1218267 ISBN: 978-0-7803-7754-7**

**Beschreibung**

Technisches Gebiet

Ausführungsbeispiele gemäß der vorliegenden Erfindung beziehen sich auf eine Spannungswandlerschaltung und auf ein Verfahren zum Betrieb einer Spannungswandlerschaltung.

Weitere Ausführungsbeispiele gemäß der Erfindung beziehen sich auf einen isolierenden resonant schaltenden DCDC-Wandler mit ausgangsspannungsabhängigem, variablen, virtuellen Übersetzungsverhältnis.

Hintergrund der Erfindung

Spannungswandlerschaltungen werden heute in vielen technischen Anwendungen eingesetzt. Gerade bei Leistungs- bzw. Hochleistungsanwendungen (beispielsweise bei Ausgangsleistungen oberhalb von 1 kW oder sogar oberhalb von 10 kW) ist ein hoher Wirkungsgrad eines Spannungswandlers wünschenswert, um die Verlustleistung gering zu halten. Ferner spielen auch Kosten und Baugröße eine nicht zu unterschätzende Rolle.

Eine Anwendung von Leistungs-Spannungswandlern bzw. Hochleistungs-Spannungswandlern besteht im Laden von Energiespeichern (Batterien) von Elektrofahrzeugen.

Während des Ladevorgangs eines Elektrofahrzeugs ändert sich beispielsweise eine Zellspannung des verbauten Zelltyps je nach Ladezustand. Durch die Zusammenfassung mehrerer Zellen zu einem Akkumulator entsteht daher ein typischer Spannungsbereich beispielsweise von 250 V bis 450 V, den ein Ladegerät bei maximaler Leistung bedienen sollte (oder bedienen können muss). Bei einer Ausgangsleistung von beispielsweise 22 kW bedeutet dies einen Ausgangsstrom von 88 Ampere bis 49 Ampere, für den ein Ladegerät ausgelegt sein sollte (oder ausgelegt sein muss). Bei aktuellen, isolierenden Stufen wie einem LLC-Resonanzwandler (z. B. einem Resonanzwandler mit zwei Induktivitäten und einer Kapazität in einem Resonanzkreis) oder einem Phasenverschiebungs-Wandler (Phase-Shift-Wandler) existiert ein fixes Übersetzungsverhältnis des Transformators. Dadurch wird der Ausgangsstrom mit diesem Übersetzungsverhältnis, vereinfacht ausgedrückt, auf die Primärseite transformiert, wodurch auch der primärseitige Effektivwert-Strom bzw. RMS-Strom (Root-Mean-Square-Strom bzw. Strom im quadratischen Mittel) mit sinkender Ausgangsspannung ansteigt, obwohl Ausgangsleistung und Zwischenkreisspannung konstant bleiben.

Fs wurde erkannt, dass ein Wandler generell zu zwei sich widersprechende Arbeitspunkte, hohe Ausgangsspannung und kleiner Strom sowie kleine Ausgangsspannung bei großem Strom, ausgelegt werden sollte (bzw. ausgelegt werden muss), wodurch entsprechende Kosten entstehen.

Im Folgenden werden einige konventionelle Lösungsansätze beschrieben.

Die erwähnten Topologien "LLC" und Phasenverschiebungs-Wandler (Phase-Shift-Wandler) steuern beispielsweise die primärseitige Vollbrücke mit variabler Frequenz und/oder variabler Phasenverschiebung an, wodurch der Ausgangsstrom geregelt werden kann. Bei diesen Steuerverfahren wird der primärseitige Stromverlauf dahingegen negativ beeinflusst, dass sowohl Effektivwert des Stroms (der beispielsweise eine quadratische Beziehung zu Leitendverlusten aufweist) als auch der spitzenmäßige Abschaltstrom ("Peak-Abschaltstrom") mit sinkender Ausgangsspannung erheblich ansteigen. Bei dem oben genannten Spannungsbereich (beispielsweise zwischen 250 V und 450 V) liegt der Anstieg grob bei Faktor 2. Hierfür ist bei den bisherigen Lösungsansätzen eine entsprechende, kostenintensive Auslegung von Halbleitern, Transformator, Induktivität (und bei LLC-Resonanzwandler der Resonanz-Kondensator) nötig. Bei Steuerung durch die Frequenz ist zusätzlich eine gesonderte Betrachtung des EMV-Verhaltens (Verhalten im Hinblick auf die elektromechanische Verträglichkeit EMV) nötig.

Die US 2009/0146619 A1 beschreibt ein Verfahren zur Leistungsfaktorkorrektur für AC/DC-Konverter und einen entsprechenden Konverter. Ein indirektes und passives Verfahren für AC/DC-Konverter-Leistungsfaktorkorrektur wird beschrieben. Die Korrektur wird erreicht, indem die Eingangsimpedanz des Konverters stabilisiert wird. Eine umgekehrte proportionale Abhängigkeit zwischen Strom und Spannung des Ausgangsleitungsfilters wird hier beibehalten. Die notwendige Abhängigkeit wird durch natürliche Charakteristika einer Schaltung mit passiven Komponenten erreicht. Ein ungesteuerter Konverter mit einer Abwechslung von parallelen und seriellen Resonanzen wird als Schaltung verwendet. Zur Erhöhung einer Betriebsfrequenz dieses Konverters wird ein Chopper oder ein Inverter verwendet. Der resonante Konverter verringert den Kommutierungsstrom der Schalter. Eine Ausgangsspannung wird durch eine Pulsbreiten-Modulation des Chopper oder Inverter geregelt.

Der Artikel "Indirect power factor correction method and corresponding sensorless switchmode resonant AC/DC converter" von J. Shklovski und K. Janson beschreibt eine Schaltungstopologie, die in AC/DC-Konvertern implementiert werden kann, um Eingangsstromverzerrungen zu reduzieren.

Der Artikel "A high-power-density DC/DC converter for high-power distributed power systems" von CANALES F ET AL, beschreibt Resonanzwandler. Z

In Anbetracht der obigen Ausführungen besteht ein Bedarf an einem Konzept zur Spannungswandlung. das über einen weiten Ausgangsspannungsbereich einen guten Kompromiss im Hinblick auf Effizienz, Realisierungsaufwand und elektromagnetischer Verträglichkeit darstellt.

Ein Ausführungsbeispiel gemäß der vorliegenden Erfindung schafft eine Spannungswandlerschaltung (beispielsweise eine isolierende Leistungs-Spannungswandlerschaltung), die beispielsweise zum Bereitstellen von Energie bei verschiedenen Ausgangsspannungen geeignet ist. Die Spannungswandlerschaltung umfasst einen Transformator mit zumindest einer Primärwicklung und zumindest einer ersten Sekundärwicklung und einer zweiten Sekundärwicklung. Die Spannungswandlerschaltung umfasst ferner einen Kondensator und eine Gleichrichteranordnung. Der Kondensator ist in Serie zu der ersten Sekundärwicklung geschaltet, um einen Resonanzkreis zu bilden. Ein erster Anschluss des Resonanzkreises (beispielsweise ein Gleichrichter-seitiger Anschluss des Kondensators), ein Abgriff, der mit einem zweiten Anschluss des Resonanzkreises (beispielsweise einem "unteren" Anschluss der ersten Sekundärwicklung) und mit einem ersten Anschluss der zweiten Sekundärwicklung (beispielsweise einem oberen Anschluss der zweiten Sekundärwicklung) gekoppelt ist (beispielsweise also einen Mittelabgriff) und ein zweiter Anschluss der zweiten Sekundärwicklung (beispielsweise ein unterer Anschluss der zweiten Sekundärwicklung) sind mit der Gleichrichteranordnung gekoppelt. Die Gleichrichteranordnung ist ausgelegt, um abhängig von über dem Resonanzkreis und über der zweiten Sekundärwicklung und über einer Serienschaltung des Resonanzkreises und der zweiten Sekundärwicklung anliegenden Spannungen einen Stromfluss zu einem Lastknoten (z. B. zu einer Last) zu ermöglichen.

Es ist ein Kerngedanke der vorliegenden Erfindung, dass eine derartige Spannungswandlerschaltung besonders gut für einen Betrieb bei verschiedenen Ausgangsspannungen geeignet ist. Insbesondere ermöglicht es die beschriebene Spannungswandlerschaltung, dass ein effektives Strom-Übersetzungsverhältnis des Transformators abhängig von der Ausgangsspannung verändert wird, da die Ausgangsspannung darüber entscheidet, ob ein Stromfluss zu einem Lastknoten überwiegend (oder, im Extremfall, ausschließlich) durch die Serienschaltung des Resonanzkreises und der zweiten Sekundärwicklung fließt oder überwiegend (oder im Extremfall ausschließlich) nur durch eine der Transformatorwicklungen fließt. Insgesamt ist festzuhalten, dass an einer Eingangsseite der Gleichrichteranordnung drei verschiedene Spannungen zur Verfügung stehen, nämlich einerseits die Spannung über dem Resonanzkreis, andererseits die Spannung über der zweiten Sekundärwicklung und weiterhin die Spannung über der Serienschaltung des Resonanzkreises und der zweiten Sekundärwicklung. Diese Spannungen sind aufgrund des Vorhandenseins des Kondensators zueinander phasenverschoben und weisen typischerweise auch unterschiedliche Zeitverläufe auf. Durch die entsprechende Schaltungsanordnung wird es ermöglicht, dass beispielsweise bei einer ersten Ausgangsspannung, die vergleichsweise groß ist, über einen weiten Zeitbereich nur die (typischerweise vergleichsweise große) über der Serienschaltung des Resonanzkreises und der zweiten Sekundärwicklung anliegende Spannung ausreichend ist, um über den Gleichrichter einen Stromfluss zu dem Lastknoten zu ermöglichen. Daher wird beispielsweise bei der vergleichsweise großen Ausgangsspannung (die teilweise als erste Ausgangsspannung bezeichnet wird) über einen vergleichsweise großen Zeitanteil die Serienschaltung des Resonanzkreises und der zweiten Sekundärwicklung genutzt, was im Ergebnis bedeutet, dass die Serienschaltung der beiden Sekundärwicklungen ein (effektives) Strom-Übertragungsverhältnis des Transformators bestimmt. Dadurch ergibt sich bei der vergleichsweise großen Ausgangsspannung ein (effektives) Strom-Übertragungsverhältnis des Transformators, das zu der vergleichsweise großen Ausgangsspannung passt.

Bei einer vergleichsweise kleinen (bzw. kleineren) Ausgangsspannung hingegen kann es während eines vergleichsweise langen Zeitanteils (beispielsweise in Bezug auf eine Periodendauer einer primärseitigen Anregung des Transformators) dazu kommen, dass bereits die Spannung über dem Resonanzkreis oder auch die Spannung über der zweiten Sekundärwicklung ausreichend sind, um einen Stromfluss über die Gleichrichteranordnung zu dem Lastknoten zu ermöglichen. Daher werden beispielsweise bei einer vergleichsweise niedrigen Ausgangsspannung (die beispielsweise als zweite Ausgangsspannung bezeichnet wird) während eines vergleichsweise großen Zeitanteils (beispielsweise bezogen auf eine Periodendauer der primärseitigen Anregung des Transformators) die erste Sekundärwicklung des Transformators oder die zweite Sekundärwicklung des Transformators alleine genutzt (von einem Strom durchflossen). Damit ist ein effektives Transformationsverhältnis kleiner, als wenn die Serienschaltung der ersten Sekundärwicklung und der zweiten Sekundärwicklung wirksam ist.

Zusammenfassend ist somit festzuhalten, dass die Verwendung eines Kondensators, der in Serie zu der ersten Sekundärwicklung geschaltet wird, um mit der ersten Sekundärwicklung einen Resonanzkreis zu bilden, dafür sorgt, dass die an der Gleichrichteranordnung anliegenden drei verschiedenen Spannungen unterschiedlich groß sind und einen Phasenversatz aufweisen. Dadurch wird ermöglicht, dass sich abhängig von der Ausgangsspannung unterschiedliche effektive Transformationsverhältnisse ergeben, wodurch beispielsweise Verluste gering gehalten werden können und wodurch von einer Veränderung einer Frequenz der primärseitigen Anregung des Transformators abgesehen werden kann. Somit wird beispielsweise eine vergleichsweise hohe Effizienz erreicht, während hingegen Probleme der elektromagnetischen Verträglichkeit gering sind. Auch ein Material- bzw. Realisierungsaufwand ist typischerweise vergleichsweise gering, weil die zusätzlichen Kosten für den Kondensator und für den Abgriff, die im Vergleich zu manchen herkömmlichen Anordnungen entstehen, nicht wesentlich sind.

Insgesamt ist somit festzuhalten, dass die hier beschriebenen Spannungswandlerschaltung ein sehr vorteilhaftes Konzept darstellt, das für den Einsatz bei wechselnden Ausgangsspannungen gut geeignet ist.

Bei einem bevorzugten Ausführungsbeispiel ist die Spannungswandlerschaltung so ausgelegt, dass bei einer ersten Ausgangsspannung zwischen den Lastknoten ein Stromfluss zu einem der Lastknoten innerhalb einer Periode eine Anregung der Primärwicklung zeitweise durch eine Serienschaltung des Resonanzkreises und der zweiten Sekundärwicklung fließt und zeitweise durch den Resonanzkreis und über den Abgriff fließt. Beispielsweise kann die Spannungswandlerschaltung so ausgelegt sein, dass bei der ersten Ausgangsspannung der Stromfluss zu dem Lastknoten zu keiner Zeit durch die zweite Sekundärwicklung und den Abgriff fließt, so dass die zweite Sekundärwicklung alleine genutzt wird. Ferner kann die Spannungswandlerschaltung so ausgelegt sein, dass bei einer zweiten Ausgangsspannung zwischen den Lastknoten, die kleiner als die erste Ausgangsspannung ist, ein Stromfluss zu einem der Lastknoten innerhalb einer Periode der Anregung zeitweise durch die Serienschaltung des Resonanzkreises und der zweiten Sekundärwicklung fließt und zeitweise durch den Resonanzkreis und den Abgriff (aber nicht durch die zweite Sekundärwicklung) fließt und zeitweise durch die zweite Sekundärwicklung und den Abgriff (aber nicht durch den Resonanzkreis) fließt. Es kann also, beispielsweise durch geeignete Wahl der Windungsverhältnisse der Sekundärwicklungen und durch geeignete Wahl des Kondensators (beispielsweise in Relation zu einer Frequenz der primärseitigen Anregung des Transformators) erreicht werden, das bei der ersten Ausgangsspannung (die vergleichsweise höher ist als die zweite Ausgangsspannung) die zweite Sekundärwicklung alleine nicht für die Bereitstellung des Stroms zu dem Lastknoten hin verwendet wird. Vielmehr wird bei der ersten Ausgangsspannung die erste Sekundärwicklung alleine (natürlich in Verbindung mit dem Kondensator) und die Serienschaltung der ersten Sekundärwicklung und der zweiten Sekundärwicklung (auch dann natürlich in Kombination mit dem Kondensator) verwendet, um den Strom zu dem Lastknoten zu erzielen.

Dadurch, dass bei der ersten Ausgangsspannung die über der zweiten Sekundärwicklung anliegende Spannung (die zwischen dem Abgriff und dem zweiten Anschluss der zweiten Sekundärwicklung anliegt) nicht für sich genommen herangezogen wird, um den Strom zu dem Lastknoten bereitzustellen, ist ein effektives Transformationsverhältnis vergleichsweise groß. Bei der zweiten Ausgangsspannung hingegen wird zumindest zeitweise die Spannung über der zweiten Sekundärwicklung herangezogen, um den Strom zu dem Lastknoten bereitzustellen. Entsprechend ergibt sich ein effektives Übersetzungsverhältnis des Transformators, das an die Situation der zweiten (niedrigeren) Ausgangsspannung (bzw. des dazugehörigen erhöhten Stroms) gut angepasst ist.

Bei einem bevorzugten Ausführungsbeispiel ist die Spannungswandlerschaltung so ausgelegt, dass bei einer ersten Ausgangsspannung zwischen den Lastknoten ein Stromfluss zu einem der Lastknoten innerhalb einer Periode eine Anregung für einen längeren Zeitraum durch den Resonanzkreis erfolgt als bei einer zweiten Ausgangsspannung zwischen den Lastknoten, die kleiner ist als die erste Ausgangsspannung. Eine derartige Ausgestaltung ist sinnvoll, da die über dem Resonanzkreis anliegende Spannung (die auch der Gleichrichteranordnung zugeführt wird) typischerweise größer ist als die über der zweiten Sekundärwicklung entstehende Spannung, die ebenso der Gleichrichteranordnung zugeführt wird. Bei der kleineren Ausgangsspannung wird damit für einen größeren Zeitanteil die über der zweiten Sekundärwicklung entstehende Spannung zur Bereitstellung des Stroms an dem Lastknoten verwendet, was im Ergebnis zu einem gut an die Situation der niedrigeren Ausgangsspannung angepassten Übersetzungsverhältnis des Transformators führt.

Bei einem bevorzugten Ausführungsbeispiel ist die Spannungswandlerschaltung so ausgelegt, dass bei einer ersten Ausgangsspannung (bzw. Ausgangsgleichspannung) zwischen den Lastknoten (z. B. 450 V) ein Stromfluss zu einem der Lastknoten, von Nulldurchgängen abgesehen, während einer gesamten Periode einer Anregung durch den Resonanzkreis erfolgt. Ferner ist die Spannungswandlerschaltung so ausgelegt, dass bei einer zweiten Ausgangsspannung (bzw. Ausgangsgleichspannung) zwischen den Lastknoten, die kleiner ist als die erste Ausgangsspannung (beispielsweise bei einer Ausgangsspannung von 250 V) ein Stromfluss zu einem der Lastknoten zeitweise durch die zweite Sekundärwicklung und den Abgriff (aber nicht durch den Resonanzkreis, also beispielsweise durch die zweite Sekundärwicklung alleine) fließt. Während so bei der ersten, größeren Ausgangsspannung von Nulldurchgängen abgesehen, stets ein Strom durch die erste Sekundärwicklung und durch den Kondensator zu der Last fließt, gibt es bei der zweiten Ausgangsspannung zumindest zeitweise einen Stromfluss zu der Last nur durch die zweite Sekundärwicklung (aber nicht durch die erste Sekundärwicklung bzw. den Kondensator). Dies führt zu einer Variation des (effektiven) Übersetzungsverhältnisses des Transformators, die an die unterschiedlichen Ausgangsspannungen gut angepasst ist.

Geht man beispielsweise davon aus, dass die zweite Sekundärwicklung eine kleinere Spannung liefert als der Resonanzkreis, und bevorzugt auch einen kleineren Innenwiderstand bzw. Gleichstromwiderstand aufweist als der Resonanzkreis, so ist nachvollziehbar, dass die Bereitstellung eines Stroms durch die zweite Sekundärwicklung alleine gerade im Falle der niedrigeren Ausgangsspannung sinnvoll ist, um Verluste gering zu halten. Eine hohe Ausgangsspannung hingegen wird besser durch den Resonanzkreis bzw. sogar durch die Serienschaltung des Resonanzkreises und der zweiten Sekundärwicklung bereitgestellt, da dadurch eine höhere Spannung erzielbar ist als durch die zweite Sekundärwicklung alleine. Der Übergang zwischen den verschiedenen Zuständen erfolgt dabei (wie auch bei den übrigen Ausführungsbeispielen) bevorzugt durch das Wirken der Gleichrichteranordnung, die beispielsweise den Strom zu dem Lastknoten basierend auf der größten an der Gleichrichteranordnung liegende Spannung bereitstellt (wobei beispielsweise die Spannung über dem Resonanzkreis, die Spannung über der zweiten Sekundärwicklung und die Spannung über der Serienschaltung aus dem Resonanzkreis und der zweiten Sekundärwicklung alle der Gleichrichteranordnung zugeführt werden bzw. an der Gleichrichterordnung anliegen).

Bei einem bevorzugten Ausführungsbeispiel ist die Spannungswandlerschaltung so ausgelegt, dass bei einer ersten Ausgangsspannung (bzw. Ausgangsgleichspannung) zwischen den Lastknoten (z. B. von 450 V) ein Stromfluss zu einem der Lastknoten, von Nulldurchgängen abgesehen, während einer gesamten Periode eine Anregung durch den Resonanzkreis erfolgt, und dass bei einer zweiten Ausgangsspannung (bzw. Ausgangsgleichspannung) zwischen den Lastknoten, die kleiner ist als die erste Ausgangsspannung, der Stromfluss zu einem der Lastknoten während zumindest 50% einer Periode der Anregung oder während zumindest 70% der Periode der Anregung nur durch eine der Sekundärwicklungen fließt. Indem bei der ersten Ausgangsspannung während der gesamten Periode der Anregung (von Nulldurchgängen natürlich abgesehen), der Stromfluss zu einem der Lastknoten durch den Resonanzkreis erfolgt, kann beispielsweise eine recht hohe Spannung erzeugt werden. So ist die Spannung über dem Resonanzkreis betragsmäßig bzw. im Hinblick auf die Amplitude (zumindest bei unbelasteter Betrachtung) typischerweise größer als die Spannung über der ersten Sekundärwicklung und auch größer als die Spannung über der zweiten Sekundärwicklung (wobei, bevorzugt, die erste Sekundärwicklung mehr Windungen aufweist als die erste Sekundärwicklung). Dies ergibt sich beispielsweise aus der Phasenverschiebung zwischen der Spannung über der ersten Sekundärwicklung und der Spannung über dem Kondensator. Bei der zweiten kleineren Ausgangsspannung hingegen ist es wünschenswert, dass der zu dem Lastknoten fließende Strom nur durch eine der Sekundärwicklungen fließt (vorzugsweise also durch eine der Sekundärwicklungen und über den Abgriff), da so einerseits ein zu der niedrigeren zweiten Ausgangsspannung passendes (effektives) Transformator-Übersetzungsverhältnis realisiert werden kann, und da so auch die Ohm'schen Verluste in dem Transformator gering gehalten werden können.

Indem also bei der ersten Ausgangsspannung der Resonanzkreis während der gesamten Periode für die Bereitstellung des Stromflusses zu dem Lastknoten benutzt wird, um so die hohe Ausgangsspannung effizient zu erhalten, wird hingegen bei der zweiten, kleineren Ausgangsspannung zumindest zeitweise die zweite Sekundärwicklung alleine (ohne dass gleichzeitig ein Strom durch den Resonanzkreis fließt) ausgenutzt, was in vergleichsweise geringen Verlusten resultiert. Somit ist die Spannungswandlerschaltung gut an die verschiedenen Erfordernisse bei einer großen Ausgangsspannung und auch bei einer kleinen Ausgangsspannung angepasst, ohne dass aufwendige Schaltungsmaßnahmen erforderlich wären.

Bei einem bevorzugte Ausführungsbeispiel ist die Spannungswandlerschaltung so ausgelegt, dass bei einer ersten Ausgangsspannung zwischen den Lastknoten ein Stromfluss zu einem der Lastknoten, von Nulldurchgängen abgesehen, während einer gesamten Periode einer Anregung durch den Resonanzkreis erfolgt, und dass bei einer zweiten Ausgangsspannung zwischen den Lastknoten, die kleiner ist als die erste Ausgangsspannung, ein Stromfluss zu einem der Lastknoten während zumindest 50% einer Periode der Anregung oder während zumindest 70% einer Periode der Anregung nur durch eine der Sekundärwicklungen fließt. Somit wird einerseits die hohe erste Ausgangsspannung (bzw. Ausgangsgleichspannung) von z. B. 450 V in effizienter Weise durch Nutzung des sekundärseitigen Resonanzkreises erzielt, und es wird andererseits bei Vorliegen der zweiten Ausgangsspannung der Stromfluss zu dem Lastknoten mit vergleichsweise geringen Verlusten bereitgestellt, indem durch die entsprechende Auslegung der Spannungswandlerschaltung erreicht wird, dass der Stromfluss zu dem Lastknoten während zumindest 50% einer Periode der Anregung oder während zumindest 70% der Periode der Anregung nur durch eine der Sekundärwicklungen fließt. Fließt der Strom zu dem Lastknoten nur durch eine der Sekundärwicklungen, so sind die Ohm'schen Verluste naturgemäß deutlich kleiner als wenn der Strom durch beide Sekundärwicklungen fließt. Auch das effektive Stromübersetzungsverhältnis des Transformators ist hier besser an den Fall der niedrigen Ausgangsspannung angepasst.

Bei einem weiteren bevorzugten Ausführungsbeispiel ist die Spannungswandlerschaltung so ausgelegt, dass bei einer ersten Ausgangsspannung (bzw. Ausgangsgleichspannung) zwischen den Lastknoten (z. B. 450 V) ein Stromfluss zu einem der Lastknoten, von Nulldurchgängen abgesehen, während einer gesamten Periode einer Anregung durch den Resonanzkreis erfolgt, und dass bei einer zweiten Ausgangsspannung zwischen den Lastknoten, die kleiner ist als die erste Ausgangsspannung (zum Beispiels 250V), ein Stromfluss zu einem der Lastknoten während zumindest 40% einer Periode der Anregung oder während zumindest 50% der Periode der Anregung nur durch die zweite der Sekundärwicklungen fließt. Indem bei der ersten, vergleichsweise großen Ausgangsspannung, die erste Sekundärwicklung bzw. der Resonanzkreis während der gesamten Periode der Anregung genutzt wird, und indem bei der zweiten, vergleichsweise kleineren Ausgangsspannung während eines erheblichen Zeitraums (beispielsweise während zumindest 40% einer Periode der Anregung oder während zumindest 50% der Periode der Anregung) die zweite der Sekundärwicklungen genutzt wird, kann wiederum eine gute Anpassung an die jeweils gewünschte bzw. vorliegende Ausgangsspannung erzielt werden.

Bei einem weiteren der bevorzugten Ausführungsbeispiele ist die Spannungswandlerschaltung so ausgelegt, dass bei einer ersten Ausgangsspannung zwischen den Lastknoten ein Stromfluss zu einem der Lastknoten während mehr als 50% einer Periodendauer einer (primärseitigen) Anregung durch eine Serienschaltung des Resonanzkreises und der zweiten Sekundärwicklung fließt (so dass beispielsweise kein Strom über den Abgriff fließt) und dass bei einer zweiten Ausgangsspannung zwischen den Lastknoten, die kleiner als die erste Ausgangsspannung ist, ein Stromfluss während höchstens 30% einer Periodendauer der Anregung durch die Serienschaltung des Resonanzkreises und der zweiten Sekundärwicklung fließt. Durch eine derartige Auslegung wird erreicht, dass bei der vergleichsweise hohen ersten Ausgangsspannung überwiegend die Serienschaltung des Resonanzkreises und der zweiten Sekundärwicklung (und dementsprechend auch einer Serienschaltung der ersten Sekundärwicklung und der zweiten Sekundärwicklung) wirksam wird, während hingegen bei der zweiten, vergleichsweise niedrigeren Ausgangsspannung überwiegend nur eine der Sekundärwicklungen wirksam wird. Auf diese Weise wird ein variables (effektives) Transformationsverhältnis des Transformators erreicht, wobei einerseits bei einer hohen Ausgangsspannung die Serienschaltung der beiden Sekundärwicklungen ausgenutzt wird, um die hohe Ausgangsspannung effizient erreichen zu können, und wobei andererseits bei der niedrigeren Ausgangsspannung die Vorteile der einzelnen Sekundärwicklungen (insbesondere deren vergleichsweise geringe Einzel-Widerstände) ausgenutzt werden. Im Übrigen wurde erkannt, dass der Übergang zwischen den beiden Zuständen, in denen überwiegend die Serienschaltung des Resonanzkreises und der zweiten Sekundärwicklung bzw. die einzelnen Sekundärwicklungen ausgenutzt werden, durch die Gleichrichteranordnung mit geringen Aufwand und beispielsweise auch ohne zusätzliche Steuereingriffe erfolgen kann.

Bei einem weiteren bevorzugten Ausführungsbeispiel ist die Spannungswandlerschaltung so ausgelegt, dass bei einer ersten Ausgangsspannung zwischen den Lastknoten ein Stromfluss zu einem der Lastknoten überwiegend (z.B. während mehr als 50% einer Periodendauer einer Anregung oder während mehr als 60% der Periodendauer der Anregung) durch eine Serienschaltung des Resonanzkreises und der zweiten Sekundärwicklung fließt (wobei beispielsweise kein Strom über den Abgriff fließt), so dass beispielsweise beide Sekundärwicklungen des Transformators genutzt werden und in ein Spannungs- und Strom-Übersetzungsverhältnis einfließen. Ferner ist die Spannungswandlerschaltung bevorzugt so ausgelegt, dass bei einer zweiten Ausgangsspannung zwischen den Lastknoten, die kleiner als die erste Ausgangsspannung ist, ein Stromfluss überwiegend (während mehr als 50% einer Periodendauer einer Anregung oder während mehr als 60% der Periodendauer der Anregung) durch nur eine der Sekundärwicklungen fließt (so dass beispielsweise nur eine jeweilige der Sekundärwicklungen genutzt wird, und so dass beispielsweise nur eine jeweilige der Sekundärwicklungen in ein effektives Spannungs- oder Strom-Übersetzungsverhältnis einfließt). Durch eine derartige Auslegung kann wiederum die vergleichsweise hohe erste Ausgleichsspannung effizient erreicht werden, und es kann weiterhin ein an die zweite vergleichsweise niedrige Ausgangsspannung angepasstes Übersetzungsverhältnis erzielt werden. Somit können Verluste gering gehalten werden, während hingegen die Komplexität der Schaltungsanordnung vergleichsweise gering ist.

Bei einem weiteren bevorzugten Ausführungsbeispiel ist der erste Anschluss des Resonanzkreises über ein erstes Gleichrichterelement, das einen Stromfluss von dem ersten Anschluss des Resonanzkreises zu dem ersten Lastknoten ermöglicht, mit dem ersten Lastknoten gekoppelt. Der erste Anschluss des Resonanzkreises ist ferner über ein zweites Gleichrichterelement, das einen Stromfluss von dem zweiten Lastknoten zu dem ersten Anschluss des Resonanzkreises ermöglicht, mit dem zweiten Lastknoten gekoppelt. Der Abgriff ist über ein drittes Gleichrichterelement, das einen Stromfluss von dem Abgriff zu dem ersten Lastknoten ermöglicht, mit dem ersten Lastknoten gekoppelt. Der Abgriff ist ferner über ein viertes Gleichrichterelement, das einen Stromfluss von dem zweiten Lastknoten zu dem Abgriff ermöglicht, mit dem zweiten Lastknoten gekoppelt. Der zweite Anschluss der zweiten Sekundärwicklung ist beispielsweise über ein fünftes Gleichrichterelement, das einen Stromfluss von dem zweiten Anschluss der zweiten Sekundärwicklung zu dem ersten Lastknoten ermöglicht, mit dem ersten Lastknoten gekoppelt. Der zweite Anschluss der zweiten Sekundärwicklung ist beispielsweise über ein sechstes Gleichrichterelement, das einen Stromfluss von dem zweiten Lastknoten zu dem zweiten Anschluss der zweiten Sekundärwicklung ermöglicht, mit dem zweiten Lastknoten gekoppelt. Insofern ist ersichtlich, dass die Gleichrichteranordnung durch eine vergleichsweise einfache Schaltungsanordnung implementiert werden kann, wobei beispielsweise der erste Anschluss des Resonanzkreises, der Abgriff und der zweite Anschluss der zweiten Sekundärwicklung jeweils über zwei Gleichrichterelemente mit beiden Lastknoten gekoppelt. Insofern fließt beispielsweise ein Strom jeweils über diejenigen Elemente (Resonanzkreis, zweite Sekundärwicklung oder Serienschaltung des Resonanzkreises und der zweiten Sekundärwicklung) über denen die (betragsmäßig) größte Spannung anliegt. Aufgrund der Phasenverschiebung zwischen der Spannung über dem Resonanzkreis und der Spannung über der zweiten Sekundärwicklung stellen sich hier im Laufe einer Periode der primärseitigen Anregung des Transformators unterschiedliche Verhältnisse ein, so dass die Gleichrichteranordnung es mit einfachen Mitteln ermöglicht, dass der Strom zu dem Lastknoten beispielsweise einmal nur durch den Resonanzkreis, einmal nur durch die zweite Sekundärwicklung und einmal durch die Serienschaltung des Resonanzkreises und der zweiten Sekundärwicklung fließt. Im Übrigen sei darauf hingewiesen, dass die entsprechende Gleichrichteranordnung sehr einfach und kostengünstig realisierbar ist und damit insgesamt eine wirtschaftliche Realisierung des Konzepts ermöglicht.

Bei einem bevorzugten Ausführungsbeispiel ist die Primärwicklung über zumindest einen Kondensator mit einer Schalterbrücke gekoppelt, so dass beispielsweise die Primärwicklung mit dem Kondensator und gegebenenfalls weiteren reaktiven Bauelementen einen (primärseitigen) Resonanzkreis bildet. Auf diese Weise kann eine primärseitige Anregung des Transformators in effizienter Weise erzeugt werden, und es kann auch erreicht werden, dass der Primärstrom zumindest näherungsweise sinusförmig ist. Es hat sich gezeigt, dass ein derartiges Anregungskonzept zusammen mit der oben bereits erläuterten sekundärseitigen Beschaltung sehr gut zusammenarbeitet.

Bei einem weiteren bevorzugten Ausführungsbeispiel liegt ein Verhältnis einer Windungszahl der ersten Sekundärwicklung und einer Windungszahl der zweiten Sekundärwicklung in einem Bereich zwischen 2 und 1, das heißt, die Wicklung 1 mit Kondensator kann beispielsweise doppelt so viele Windungen aufweisen als die direkt an den Gleichrichter angeschlossene Windung 2. Eine derartige Wahl der Verhältnisse der Windungszahlen begünstigt den Einsatz der Spannungswandlerschaltung über einen weiteren Bereich der Ausgangsspannung.

Bei einem bevorzugten Ausführungsbeispiel ist die Resonanzfrequenz des Resonanzkreises um zumindest 25% größer als eine Anregungsfrequenz der Primärwicklung. Beispielsweise ist die Resonanzfrequenz sekundärseitig größer als die anregende Frequenz, und zwar beispielsweise (grob) zwischen Faktor 1,3 bis Faktor 3. Durch diese Ausgestaltung kann beispielsweise erreicht werden, dass eine Phasenverschiebung zwischen einer Spannung über der ersten Sekundärwicklung und einer Spannung über den Kondensator in einem vorteilhaften Bereich liegt.

Bei einem bevorzugten Ausführungsbeispiel ist die Spannungswandlerschaltung ausgelegt, um eine Ausgangsspannung bereitzustellen, die zwischen verschiedenen Betriebszuständen und zumindest um einen Faktor von 1,3, oder zumindest um einen Faktor von 1,5, oder zumindest um einen Faktor von 2 variiert. Es hat sich gezeigt, dass die vorliegende Schaltung besonders vorteilhaft ist, wenn derartig große Variationen der Ausgangsspannung auftreten, da die Schaltung dann einerseits in einem Betriebszustand mit einem ersten Spannungs- oder Strom-Übersetzungsverhältnis und in einem Betriebszustand mit einem zweiten Spannungs- oder Strom-Übersetzungsverhältnis betrieben werden kann, wobei sich die effektiven Spannungs- oder Strom-Übersetzungsverhältnisse deutlich unterscheiden können. Die vorliegende Schaltungsanordnung kann ihre Vorteile somit voll zur Geltung bringen.

Bei einem bevorzugten Ausführungsbeispiel ist die Spannungswandlerschaltung ausgelegt, um einen Energiespeicher (z. B. einen Akkumulator) zu laden, dessen Klemmen-Spannung zwischen einem entladenen Zustand und einem geladenen Zustand um zumindest einen Faktor von 1,3 oder um zumindest einen Faktor von 1,5 oder um zumindest einen Faktor von 2 variiert. Es hat sich gezeigt, dass die vorliegende Spannungswandlerschaltung gerade für das Laden von Energiespeichern, deren Klemmen-Spannung deutlich variiert, besonders gut geeignet ist.

Bei einem bevorzugten Ausführungsbeispiel ist die Spannungswandlerschaltung so ausgelegt, dass bei einer ersten Ausgangsspannung während einer Periode einer Anregung ein Stromflusses zu einem Lastknoten zunächst (beispielsweise zwischen t1 und t2) in einer ersten Stromrichtung durch den Resonanzkreis und über den Abgriff fließt, dann (beispielsweise zwischen Zeiten t2 und t3) in der ersten Stromrichtung durch die Serienschaltung des Resonanzkreises und der zweiten Sekundärwicklung fließt, dann (beispielsweise zwischen Zeiten t3 und t4+x) in einer zweiten Stromrichtung, die der ersten Stromrichtung entgegengesetzt ist, durch den Resonanzkreis und über den Abgriff fließt, und dann (beispielsweise zwischen Zeiten t4+x und t4+y) in der zweiten Stromrichtung durch die Serienschaltung des Resonanzkreises und der zweiten Sekundärwicklung fließt.

Ferner ist die Spannungswandlerschaltung bevorzugt so ausgelegt, dass bei einer zweiten Ausgangsspannung, die kleiner ist als die erste Ausgangsspannung, während einer Periode der Anregung ein Stromfluss zu dem Lastknoten zunächst (beispielsweise zwischen Zeiten t1 und t2) in der zweiten Stromrichtung durch die zweite Sekundärwicklung und über den Abgriff fließt, dann (beispielsweise zwischen Zeiten t2 und t3) in der ersten Stromrichtung durch den Resonanzkreis und über den Abgriff fließt, dann (beispielsweise zwischen Zeiten t3 und t4) in der ersten Stromrichtung durch die Serienschaltung des Resonanzkreises und der zweiten Sekundärwicklung fließt, dann (beispielsweise zwischen Zeiten t4 und t4+x) in der ersten Stromrichtung durch die zweite Sekundärwicklung und den Abgriff fließt, dann in der zweiten Stromrichtung durch den Resonanzkreis und über den Abgriff fließt, dann in der zweiten Stromrichtung durch die Serienschaltung des Resonanzkreises und der zweiten Sekundärwicklung fließt, und dann in der zweiten Stromrichtung durch die zweite Sekundärwicklung und über den Abgriff fließt.

Es wurde herausgefunden, dass eine derartige Auslegung der Spannungswandlerschaltung (die beispielsweise durch geeignete Wahl der Windungszahlen der zweiten Sekundärwicklung und der dritten Sekundärwicklung sowie durch eine geeignete Wahl des Kondensators erreicht werden kann) zu einem besonders guten Verhalten sowohl bei vergleichsweise hohen Ausgangsspannungen (beispielsweise bei der ersten Ausgangsspannung) und auch bei vergleichsweise niedrigen Ausgangsspannungen (beispielsweise bei der zweiten Ausgangsspannung) führt.

Ein weiteres Ausführungsbeispiel gemäß der Erfindung schafft ein Verfahren zum Betrieb einer (beispielsweise isolierten) Spannungswandlerschaltung (beispielsweise einer Leistungs-Spannungswandlerschaltung), die beispielsweise zum Bereitstellen von Energie bei verschiedenen Ausgangsspannungen dient. Die Spannungswandlerschaltung umfasst beispielsweise einen Transformator mit zumindest einer Primärwicklung und zumindest einer ersten Sekundärwicklung und einer zweiten Sekundärwicklung, einen Kondensator und eine Gleichrichteranordnung, wobei der Kondensator in Serie zu der ersten Sekundärwicklung geschaltet ist, um einen ersten Resonanzkreis zu bilden, wobei ein erster Anschluss des Resonanzkreises (beispielsweise ein Gleichrichter-seitiger Anschluss von C5), ein Abgriff, der mit dem zweiten Anschluss des Resonanzkreises (beispielsweise einem "unteren" Anschluss der ersten Sekundärwicklung) und mit einem ersten Anschluss der zweiten Sekundärwicklung (beispielsweise einem "oberen" Anschuss der zweiten Sekundärwicklung) gekoppelt ist (beispielsweise ein Mittelabgriff) und ein zweiter Anschluss der zweiten Sekundärwicklung (beispielsweise ein "unterer" Anschluss der zweiten Sekundärwicklung) mit der Gleichrichteranordnung gekoppelt sind.

Bei dem Verfahren erfolgt über die Gleichrichteranordnung abhängig von über dem Resonanzkreis und über der zweiten Sekundärwicklung und über einer Serienschaltung des ersten Resonanzkreises und der zweiten Sekundärwicklung anliegenden Spannungen (und abhängig von einer Spannung an den Lastknoten) ein Stromfluss zu einem Lastknoten. Das Verfahren basiert auf denselben Überlegungen wie die oben beschriebene Spannungswandlerschaltung.

Ferner sei darauf hingewiesen, dass das Verfahren um alle Merkmale, Funktionalitäten und Details ergänzt werden kann, die hierin in Bezug auf die Spannungswandlerschaltung beschrieben sind, und zwar einzeln oder in Kombination.

Figurenkurzbeschreibung

Ausführungsbeispiele gemäß der vorliegenden Erfindung werden nachfolgend Bezug nehmend auf die beiliegenden Figuren näher erläutert.
Es zeigen:

Fig. 1 ein Schaltbild einer Spannungswandlerschaltung, gemäß einem Ausführungsbeispiel der vorliegenden Erfindung;

Fig. 2 eine grafische Darstellung von Simulationsergebnissen;

Fig. 3 ein Schaltbild einer Spannungswandleranordnung gemäß einem weiteren Ausführungsbeispiel der Erfindung;

Fig. 4 eine grafische Darstellung von Verläufen der charakteristischen Größen für eine Ausgangsspannung VOUT = 450 V;

Fig. 5 eine grafische Darstellung von Verläufen der charakteristischen Größen für eine Ausgangsspannung VOUT = 250 V;

Fig. 6 ein Ersatzschaltbild der Spannungswandlerschaltung in einem Zustand "A";

Fig. 7 ein Ersatzschaltbild der Spannungswandlerschaltung in einem Zustand "B";

Fig. 8 ein Ersatzschaltbild der Spannungswandlerschaltung in einem Zustand "C";

Fig. 9 ein Ersatzschaltbild der Spannungswandlerschaltung in einem Zustand "D";

Fig. 10 ein Ersatzschaltbild der Spannungswandlerschaltung in einem Zustand "E"; und

Fig. 11 ein Schaltbild einer Spannungswandlerschaltung gemäß einem Ausführungsbeispiel der vorliegenden Erfindung.

Detaillierte Beschreibung der Ausführungsbeispiele der vorliegenden Erfindung

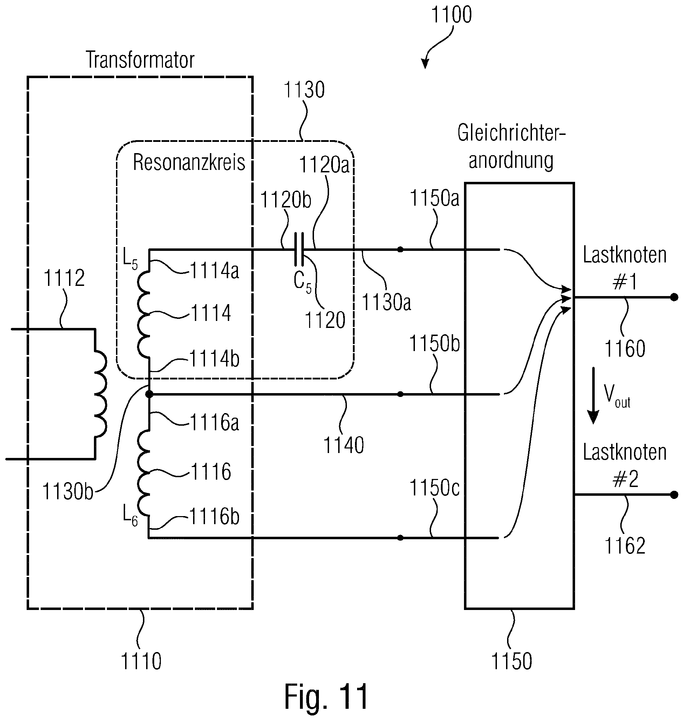

1. Spannunqswandlerschaltung gemäß Fig. 11

Fig. 11 zeigt ein Schaltbild einer Spannungswandlerschaltung 1100 gemäß einem Ausführungsbeispiel der vorliegenden Erfindung.
Bei der Spannungswandlerschaltung 1100 kann es sich beispielsweise um eine isolierende Leistungs-Spannungswandlerschaltung zum Bereitstellen von Energie bei verschiedenen Ausgangsspannungen handeln.
Die Spannungswandlerschaltung 1100 umfasst einen Transformator 1110 mit zumindest einer Primärwicklung 1112, einer ersten Sekundärwicklung 1114 (auch mit L5 bezeichnet) und einer zweiten Sekundärwicklung 1116 (auch mit L6 bezeichnet). Die Spannungswandlerschaltung umfasst ferner einen Kondensator 1120 (auch mit C5 bezeichnet). Der Kondensator 1120 ist dabei in Serie mit der ersten Sekundärwicklung 1114 geschaltet und bildet somit zusammen mit der ersten Sekundärwicklung 1114 einen Resonanzkreis (beispielsweise einen Serienresonanzkreis bzw. Serienschwingkreis), wobei eine Dämpfung der Resonanz hier zur Vereinfachung nicht berücksichtigt wird. Der Resonanzkreis, umfassend die Serienschaltung der ersten Sekundärwicklung 1114 und den Kondensator 1120, ist mit 1130 bezeichnet.
Der Resonanzkreis wird eigentlich (genau genommen) mit der primärseitigen Serieninduktivität und auch dem primärseitigen Kondensator gebildet, da der Trafo eine ideale Kopplung von 1 in dem Ersatzschaltbild besitzt. In einem realen Trafo besitzt L5 natürlich eine Streuinduktivität die zum Resonanzkreis beiträgt. Ist hierin also die Rede davon, dass die erste Sekundärwicklung 1114 und der Kondensator 1120 einen Resonanzkreis bilden, so schließt dies nicht aus, dass weitere Komponenten wie beispielsweise eine primärseitigen Serieninduktivität (z.B.108a,308a,L2) und auch (soweit vorhanden, beispielsweise bei einem LLC_Wandler) ein primärseitiger Kondensator (z.B. 108b,308b,C2) sowie zum Beispiel Induktivitäten des Transformators zu einer Resonanz beitragen bzw. einen Einfluss auf eine Resonanzfrequenz haben. Die Windung selber (beispielsweise die Windung des Transformators) ist typischerweise nicht bestimmend für die Resonanzfrequenz, sondern lediglich der Streuanteil, der in den Figuren nicht explizit gezeigt ist.

Beispielsweise bildet ein erster Anschluss 1120a des Kondensators 1120 einen ersten Anschluss 1130a des Resonanzkreises. Ein zweiter Anschluss 1120b des Kondensators 1120 ist beispielsweise mit dem ersten Anschluss 1114a der ersten Sekundärwicklung 1114 verbunden (bzw. gekoppelt). Ein zweiter Anschluss 1114b der ersten Sekundärwicklung 1114 bildet beispielsweise einen zweiten Anschluss 1130b des Resonanzkreises 1130. Der zweite Anschluss 1130b des Resonanzkreises 1130 ist beispielsweise mit einem ersten Anschluss 1116a der zweiten Sekundärwicklung 1116 gekoppelt. Der zweite Anschluss 1230b des Resonanzkreises und der erste Anschluss 1116a der zweiten Sekundärwicklung 1116 sind beispielsweise mit einem Abgriff 1140 gekoppelt.

Der erste Anschluss 1130a des Resonanzkreises 1130 sowie der Abgriff 1140 (der somit mit dem zweiten Anschluss 1130b des Resonanzkreises 1130 und mit dem ersten Anschluss 1116a der zweiten Sekundärwicklung gekoppelt ist) sowie ein zweiter Anschluss 1116b der zweiten Sekundärwicklung sind in einer Gleichrichteranordnung 1150 (genauer gesagt, mit einer Eingangsseite der Gleichrichteranordnung 1150) gekoppelt. Eine Ausgangsseite der Gleichrichteranordnung 1150 ist beispielsweise mit einem ersten Lastknoten 1160 und mit einem zweiten Lastknoten 1162 gekoppelt, an denen eine Last (wie beispielsweise eine Batterie) angeschlossen werden kann. Zwischen dem ersten Lastknoten 1160 und dem zweiten Lastknoten 1162 liegt beispielsweise eine Ausgangsspannung $V_{out}$, an. Die Gleichrichteranordnung ist beispielsweise ausgelegt, um abhängig von über dem Resonanzkreis 1130 und über der zweiten Sekundärwicklung 1116 und über der Serienschaltung des Resonanzkreises 1130 und der zweiten Sekundärwicklung 1116 anliegenden Spannungen einen Stromfluss zu einem der Lastknoten (z. B. zu dem ersten Lastknoten 1160) zu ermöglichen (sowie auch einen Stromfluss zurück von dem zweiten der Lastknoten).

Was die Funktionalität der Spannungswandlerschaltung 1100 anbelangt, so sei darauf hingewiesen, dass an die Primärwicklung 1112 durch eine hier nicht gezeigte Schaltungsanordnung eine primärseitige Anregung angelegt wird. Auf die Art, wie genau die primärseitige Anregung erzeugt wird, kommt es für das Verständnis des der Erfindung zugrunde liegenden Konzepts hier nicht an.

Durch einen Stromfluss in der Primärwicklung 1112 werden in den Sekundärwicklungen 1114, 1116 Spannungen induziert. Die induzierten Spannungen hängen unter anderem von den Windungszahlen der Sekundärwicklungen 1114, 1116 ab, sowie auch von der jeweiligen Belastung der Sekundärwicklungen 1114, 1116. Die Gleichrichteranordnung 1150 "sieht" eingangsseitig drei Spannungen, nämlich einerseits die Spannung über dem Resonanzkreis 1130 (die Spannung zwischen dem ersten Anschluss 1130a des Resonanzkreises und dem Abgriff 1140), die Spannung über der zweiten Sekundärwicklung, also die Spannung zwischen dem Abgriff 1140 und dem zweiten Anschluss 1116b der zweiten Sekundärwicklung 1116, und die Spannung über der Serienschaltung des Resonanzkreises 1130 und der zweiten Sekundärwicklung 1116 (also die Spannung zwischen dem ersten Anschluss 1130a des Resonanzkreises und dem zweiten Anschluss 1116b der zweiten Sekundärwicklung).

Im Übrigen kann man auch sagen, dass an dem ersten Anschluss 1130a des Resonanzkreises, an dem Abgriff 1140 und an dem zweiten Anschluss 1116b der zweiten Sekundärwicklung drei verschiedene Potenziale anliegen, wobei die Wahl des Bezugspotenzials grundsätzlich beliebig ist. Ist eine maximale Potenzialdifferenz zwischen den genannten drei Potenzialen größer als die Ausgangsspannung $V_{out}$ zwischen den Lastknoten 1160, 1162, so fließt durch die Gleichrichteranordnung typischerweise ein Strom von dem Gleichrichtereingang mit dem höchsten Potenzial zu dem positiven Lastknoten, und es fließt im Übrigen auch durch die Gleichrichteranordnung ein Strom von dem negativen Lastknoten zu dem Gleichrichtereingang mit dem niedrigsten Potenzial. Liegt beispielsweise an dem mit dem ersten Anschluss 1130a des Resonanzkreises verbundenen Gleichrichtereingang 1150a das höchste Potenzial an und an dem mit dem dritten Eingang 1150c der Gleichrichteranordnung verbundenen zweiten Anschluss 1116c der zweiten Sekundärwicklung 1116 das niedrigste Potenzial an (wobei an dem mit dem zweiten Eingangs-Anschluss 1150b der Gleichrichteranordnung verbundenen Abgriff ein dazwischen liegendes Potenzial anliegt), und ist die Spannung (= Potenzialdifferenz) zwischen dem Potenzial an dem ersten Gleichrichtereingang 1150a und dem Potenzial an dem dritten Gleichrichtereingang 1150c größer als die Ausgangsspannung, so fließt ein Strom durch die Serienschaltung des Resonanzkreises 1130 und der zweiten Sekundärwicklung 1116 hin zu dem positiven Lastknoten (z. B. zu dem Lastknoten 1160). Ferner fließt im Übrigen auch ein Strom zurück von dem negativen Lastknoten (z. B. von dem Lastknoten 1162), und zwar beispielsweise zu dem zweiten Anschluss 1116b der zweiten Sekundärwicklung. Über den Abgriff 1140 fließt in diesem Fall typischerweise kein Strom.

Liegt hingegen das Potenzial an dem zweiten Anschluss 1116b der zweiten Sekundärwicklung zwischen den Potenzialen an dem ersten Anschluss 1130a des Resonanzkreises und dem Potenzial an dem Abgriff 1140, so fließt typischerweise kein Strom durch die zweite Sekundärwicklung, und es fließt Laststrom nur durch den Resonanzkreis (aber nicht durch die zweite Sekundärwicklung) zu dem positiven Lastknoten (z. B. zu dem Lastknoten 1160). In diesem Fall fließt ein Strom über den Abgriff 1140, aber es fließt kein Strom über den zweiten Anschluss 1116b der zweiten Sekundärwicklung 1116.

Liegt nun beispielsweise das Potenzial an dem ersten Anschluss 1130 des Resonanzkreises zwischen dem Potenzial an dem Abgriff 1140 und das Potenzial an dem zweiten Anschluss 1116b der zweiten Sekundärwicklung, so fließt beispielsweise kein Strom durch den Resonanzkreis, sondern es fließt beispielsweise ein Strom durch die zweite Sekundärwicklung 1116 (und beispielsweise über den Abgriff) zu dem positiven Lastknoten (z. B. zu dem Lastknoten 1160).

In anderen Worten, abhängig von den unterschiedlichen Spannungen, die über dem Resonanzkreis 1130, der zweiten Sekundärwicklung 1116 und der Serienschaltung des Resonanzkreises 1130 und der zweiten Sekundärwicklung 1116 anliegen, ergibt sich ein entsprechender Stromfluss zu dem positiven Lastknoten (z. B. zu dem Lastknoten 1160) (bzw. von dem negativen Lastknoten, z. B. von dem Lastknoten 1162) durch die Gleichrichteranordnung 1150. Dadurch dass sich die genannten Spannungen in ihren Momentanwerten unterscheiden (was beispielsweise durch Unterschiede in den Amplituden, aber auch durch Unterschiede in der Phasenlage, die insbesondere durch den Kondensator 1120 verursacht wird, bedingt ist) ergibt sich der Effekt, dass ein Stromfluss zu dem (positiven) Lastknoten 1160 zu verschiedenen Zeiten während einer Periode der primärseitigen Anregung des Transformators 1110 durch verschiedene der Wicklungen fließt.

So gibt es beispielsweise, abhängig von der Ausgangsspannung, Zeiten innerhalb einer Periode der Anregung, während derer der Strom zu dem positiven Lastknoten nur durch den Resonanzkreis 1130, aber nicht durch die zweite Sekundärwicklung 1116 fließt (wobei der Strom dann auch über den Abgriff 1140 fließt). Ferner gibt es beispielsweise , abhängig von der Ausgangsspannung, Zeiten während einer Periode der Anregung, zu denen der Stromfluss zu dem (positiven) Lastknoten 1160 durch die Serienschaltung des Resonanzkreises 1130 und der zweiten Sekundärwicklung 1160 fließt (wobei dann typischerweise kein Strom über den Abgriff 1140 fließt). Außerdem gibt es, je nach Ausgangsspannung zwischen den Lastknoten 1160, 1162, auch Zeitpunkte innerhalb einer Periode, zu denen der Stromfluss zu dem (positiven) Lastknoten 1160 nur durch die zweite Sekundärwicklung 1116, aber nicht durch den Resonanzkreis 1130 (sondern beispielsweise über den Abgriff 1140) fließt. Dadurch, dass es hier verschiedene Zustände gibt, durch welche der Sekundärwicklungen der Strom zu dem (positiven) Lastknoten 1160 fließt, und dadurch, dass Zeitanteile, während derer die verschiedenen Zustände bestehen, abhängig von der Ausgangsspannung zwischen den Lastknoten 1160, 1162 variieren, verändert sich ein effektives Spannungs-Übersetzungsverhältnis bzw. Strom-Übersetzungsverhältnis des Transformators 1110, wobei auch die Ohm'schen Verluste auf der Sekundärseite des Transformators sich entsprechend verändern.

Fließt der Strom zu dem positiven Lastknoten 1160 beispielsweise durch die Serienschaltung des Resonanzkreises 1130 und der zweiten Sekundärwicklung 1116, und damit auch durch die Serienschaltung der beiden Sekundärwicklungen 1114, 1116, so wird bei gegebener Anregung die Sekundärspannung (über den Sekundärwicklungen 1114, 1116) vergleichsweise groß, und der in den Sekundärwicklungen 1114, 1116 induzierte Strom vergleichsweise klein. Fließt hingegen der Strom zu dem positiven Lastknoten 1160 nur durch eine der Sekundärwicklungen 1114, 1116 (und damit über den Abgriff 1140), so ist auch nur eine der Sekundärwicklungen 1114, 1116 wirksam, wodurch bei der gegebenen Anregung eine vergleichsweise kleine Sekundärspannung induziert wird, und wodurch bei der gegebenen Anregung hingegen ein vergleichsweise großer Sekundärstrom induziert wird. Ist nur eine der Sekundärwicklungen 1114, 1116 zu einem bestimmten Zeitpunkt wirksam (also von einem Strom durchflossen), so wird auch der sekundärseitige effektive Ohm'sche Widerstand vergleichsweise geringer (beispielsweise im Vergleich zu dem Fall, in dem beide Sekundärwicklungen 1114, 1116 von einem Strom durchflossen werden).

Insgesamt ist somit festzuhalten, dass durch die Serienschaltung des Kondensators 1120 mit der ersten Sekundärwicklung 1114 und durch die Verwendung des Abgriffes 1140 sowie durch die Verwendung einer Gleichrichteranordnung 1150 mit drei Gleichrichtereingängen 1150a, 1150b, 1150c erreicht wird, dass die Spannungswandlerschaltung bei verschiedenen Ausgangsspannungen $V_{out}$ mit guter Effizienz einsetzbar ist, ohne dass eine Veränderung der primärseitigen Anregung (beispielsweise an der Primärwicklung 1112) erforderlich ist. Vielmehr kann beispielsweise durch geeignete Dimensionierung der Sekundärwicklungen 1114, 1116 und des Kondensators 1120 erreicht werden, dass bei einer vergleichsweise hohen Ausgangsspannung der Strom zu dem positiven Lastknoten hauptsächlich durch den Resonanzkreis und/oder durch die Serienschaltung des Resonanzkreises und der zweiten Sekundärwicklung fließt (aber nur vergleichsweise selten oder gar nicht durch die zweite Sekundärwicklung 1116 alleine) und dass bei einer vergleichsweise niedrigeren Ausgangsspannung der Stromfluss zu den positiven Lastknoten hauptsächlich nur durch eine der Sekundärwicklungen fließt (aber nur selten oder gar nicht durch die Serienschaltung des Resonanzkreises und der zweiten Sekundärwicklung).

Dadurch wird ein sehr effizientes Konzept geschaffen, wobei die Dimensionierung basierend auf einer gegebenen eingangsseitigen Anregung und auf einem gewünschten Bereich von Ausgangsspannungen vergleichsweise einfach möglich ist.

Es wird darauf hingewiesen, dass die Schaltungsanordnung 1100 gemäß Fig. 11 um alle Merkmale, Funktionalitäten und Details ergänzt werden kann, die hierin beschrieben sind. So können die Merkmale, Funktionalitäten und Details der übrigen hierin beschriebenen Ausführungsbeispiele sowohl einzeln als auch in Kombination in die Schaltung 1100 gemäß der Fig. 11 aufgenommen werden. Die Konzepte der Schaltungsanordnung 1100 können ebenso einzeln oder in Kombination in die anderen Schaltungsanordnungen übernommen werden.

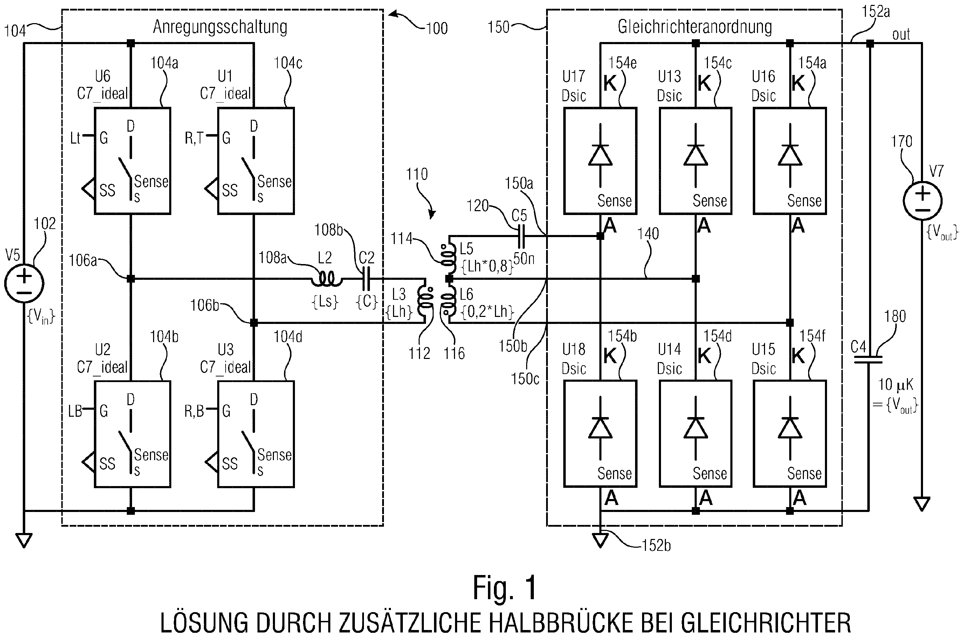

Ausführunqsbeispiel gemäß Fig. 1

Fig. 1 zeigt einen Schaltplan einer Spannungswandlerschaltung 100 gemäß einem Ausführungsbeispiel der vorliegenden Erfindung.

Die Spannungswandlerschaltung 100 umfasst eine Anregungsschaltung 104, die eine Eingangsspannung von einer Eingangsspannungsquelle 102 (beispielsweise einer Gleichspannungsquelle) empfängt. Die Spannungswandlerschaltung 100 umfasst ferner einen Transformator 110 mit einer Primärwicklung 112, die mit der Anregungsschaltung 104 gekoppelt ist. Der Transformator 110 umfasst ferner eine erste Sekundärwicklung 114 (auch mit L5 bezeichnet) und eine zweite Sekundärwicklung 116 (auch mit L6 bezeichnet). Die Spannungswandlerschaltung 100 umfasst ferner eine Gleichrichteranordnung 150 mit einem ersten Eingangsanschluss 150a, einem zweiten Eingangsanschluss 150b und einem dritten Eingangsanschluss 150c. Ein Kondensator 120 ist in Serie mit der ersten Sekundärwicklung 114 geschaltet, so dass die erste Sekundärwicklung 114 und der Kondensator 120 beispielsweise einen Resonanzkreis bilden.

Ein erster Anschluss des Kondensators 120 ist beispielsweise mit einem ersten Eingangsanschluss 150a der Gleichrichteranordnung 150 gekoppelt, ein zweiter Anschluss des Kondensators 120 ist beispielsweise mit einem ersten Anschluss der ersten Sekundärwicklung 114 gekoppelt. Ein zweiter Anschluss der ersten Sekundärwicklung 114 ist beispielsweise mit einem ersten Anschluss der zweiten Sekundärwicklung 116 gekoppelt. Ein Abgriff 140 ist mit dem zweiten Anschluss der ersten Sekundärwicklung 114 und mit dem ersten Anschluss der zweiten Sekundärwicklung 116 gekoppelt. Der Abgriff 140 ist mit dem zweiten Eingangsanschluss 150b der Gleichrichteranordnung 150 gekoppelt. Ein zweiter Anschluss der zweiten Sekundärwicklung 116 ist mit dem dritten Eingangsanschluss 150c der Gleichrichteranordnung 150 gekoppelt. Ein erster Ausgangsanschluss 152a der Gleichrichteranordnung 150, der auch als erster Lastknoten betrachtet werden kann, ist mit einem ersten Anschluss einer Last 170 gekoppelt. Ein zweiter Ausgangsanschluss 152b der Gleichrichteranordnung, der auch als zweiter Lastknoten betrachtet werden kann, ist beispielsweise mit einem zweiten Anschluss der Last 170 gekoppelt. Die Kopplung kann beispielsweise über einen Bezugspotenzial-Leiter oder auch direkt erfolgen. Elektrisch parallel zu der Last ist im Übrigen noch eine Kapazität 180 geschaltet, die als optional angesehen werden kann.

Im Folgenden wird auf Details der einzelnen Komponenten eingegangen. Diese Details sind im Übrigen als optional anzusehen und können unabhängig von Details anderer Komponenten bzw. Einheiten eingesetzt werden.

Die Eingangsspannungsquelle 102 kann beispielsweise eine Gleichspannung liefern. Verschiedene Schaltungsanordnungen können hier als Eingangsspannungsquelle verwendet werden. Die Gleichspannungsquelle 102 kann beispielsweise durch einen Wechselspannungs-Gleichspannungs-Wandler oder durch einen Gleichspannungs-Energiespeicher gebildet werden. Im Übrigen ist es auch denkbar, dass die Gleichspannungsquelle 102 durch eine Wechselspannungsquelle ersetzt wird.

Die Anregungsschaltung 104 umfasst beispielsweise eine Schalter-Brücke (zum Beispiel eine H-Brücke oder Vollbrücke) mit vier Schaltern. Ein erster steuerbarer Schalter 104a (beispielsweise ein Halbleiterschalter) ist beispielsweise zwischen einen ersten Anschluss der Spannungsquelle 102 und einen ersten Brückenknoten 106a geschaltet. Ein zweiter Schalter 104b ist beispielsweise zwischen den ersten Brückenknoten 106a und einen zweiten Anschluss der Spannungsquelle 102 geschaltet. Ein dritter Schalter 104c ist beispielsweise zwischen den ersten Anschluss der Spannungsquelle 102 und einem zweiten Brückenknoten 106b geschaltet. Ein vierter Schalter 104d ist beispielsweise zwischen dem zweiten Brückenknoten 106b und dem zweiten Anschluss der Spannungsquelle 102 geschaltet. Insofern bilden die Schaltereinheiten 104a, 104b, 104c, 104d eine Vollbrücke. Die Schaltereinheit 104a, 104b kann den ersten Brückenknoten 106a wahlweise zu dem Potenzial an dem ersten Anschluss der Spannungsquelle 102 oder zu dem Potenzial an dem zweiten Anschluss der Spannungsquelle 102 ziehen. Die Schaltereinheit 104c,104d kann den zweiten Brückenknoten 106b beispielsweise zu dem Potenzial an dem ersten Anschluss der Spannungsquelle und zu dem Potenzial an dem zweiten Anschluss der Spannungsquelle 102 ziehen.

Elektrisch zwischen den ersten Brückenknoten 106a und den zweiten Brückenknoten 106b ist eine Serienschaltung aus einer Induktivität 108a, einer Kapazität 108b und der Primärwicklung 112 die geschaltet. Somit kann beispielsweise ein Schwingkreis, der durch die Induktivität 108a, durch die Kapazität 108b und durch die Primärwicklung 112 gebildet wird, und der auch in den sekundärseitigen Resonanzkreis mit eingeht, angeregt werden, wobei die Anregung durch die Ansteuerung der Schalter bzw. Halbleiterschalter 104a bis 104d gesteuert werden kann.

Diesbezüglich sei allerdings auch darauf hingewiesen, dass die Anregungsschaltung 104 durch eine andersartige Anregungsschaltung ersetzt werden kann, da es bei dem vorliegenden Konzept nicht auf die konkrete Art der Anregung ankommt.

Im Hinblick auf den Transformator sei darauf hingewiesen, dass die Primärwicklung 112 (auch mit L3 bezeichnet) beispielsweise eine Induktivität Lh aufweisen kann. Die erste Sekundärwicklung 114 (auch mit L5 bezeichnet) kann beispielsweise eine Induktivität Lh x 0,8 aufweisen, und die zweite Sekundärinduktivität kann beispielsweise eine Induktivität von 0,2 x Lh aufweisen. Insbesondere ist somit festzuhalten, dass beispielsweise die beiden Sekundärwicklungen 114, 116 Induktivitäten aufweisen können, die kleiner sind als die Induktivität der Primärwicklung. Ferner sei darauf hingewiesen, dass beispielsweise eine Induktivität der ersten Primärwicklung um mindestens einem Faktor von 2 größer sein kann als eine Induktivität der zweiten Sekundärwicklung 116. Allerdings sei darauf hingewiesen, dass die Verhältnisse der Induktivitäten bzw. der Windungszahlen der Wicklungen 12, 114, 116 variiert werden können. Nichtsdestoweniger wird es bevorzugt, dass die erste Sekundärwicklung 114 und die zweite Sekundärwicklung 116 unterschiedliche Windungszahlen aufweisen, wobei sich die Windungszahlen beispielsweise zumindest um einen Faktor von 1,5 unterscheiden. Gleiche Windungszahlen bei den Sekundärwicklungen 114, 116 sind allerdings bei entsprechenden Ausführungsbeispielen auch möglich.

Der Kondensator 120 weist hier beispielsweise eine Kapazität von 50 Nanofarad auf, wobei die Kapazität je nach Anwendungsfall und der Dimensionierung auch deutlich größer oder deutlich kleiner sein kann. Ein Bereich von 5 Nanofarad bis 500 Nanofarad wird bevorzugt. Andere Kapazitäten sind aber auch möglich.

Die Gleichrichteranordnung 150 ist ausgelegt, um beispielsweise einen Stromfluss von demjenigen der Eingangsanschlüsse 150a, 150b, 150c zu dem ersten (positiven) Anschluss der Last 170 zu ermöglichen, die ein größtes Potenzial aufweist (sofern dieses Potenzial größer ist als das Potenzial an dem ersten (positiven) Anschluss der Last 170). Ferner ist die Gleichrichteranordnung beispielsweise ausgelegt, um einen Stromfluss von einem negativen Anschluss der Last 170 zu demjenigen der Eingangsanschlüsse 150a, 150b, 150c der Gleichrichteranordnung 150 zu ermöglichen, der ein niedrigstes Potenzial aufweist (sofern dieses Potenzial niedriger ist als das Potenzial an dem negativen Anschluss der Last 170).

Beispielsweise umfasst die Gleichrichteranordnung 150 ein erstes Gleichrichterelement 154a, das zwischen den ersten Eingangsanschluss 150a und den ersten Ausgangsanschluss 152a geschaltet ist, und das selektiv einen Stromfluss von dem ersten Eingangsanschluss 150a hin zu dem ersten Ausgangsanschluss 152a ermöglicht. Ferner umfasst die Gleichrichteranordnung 150 beispielsweise ein drittes Gleichrichterelement 154c, das zwischen den zweiten Eingangsanschluss 150b und den ersten Ausgangsanschluss 152a geschaltet ist, und das selektiv einen Stromfluss von dem zweiten Eingangsanschluss 150b zu dem ersten Ausgangsanschluss 152a ermöglicht. Die Gleichrichteranordnung 150 umfasst ferner ein drittes Gleichrichterelement 154e, das zwischen den dritten Eingangsanschluss 150c und den ersten Ausgangsanschluss 152a geschaltet ist, und das selektiv einen Stromfluss von dem dritten Eingangsanschluss 150c zu dem ersten Ausgangsanschluss 152a ermöglicht.

Die Gleichrichteranordnung 150 umfasst ferner ein zweites Gleichrichterelement 154b, das zwischen den zweiten Ausgangsanschluss 152b und den ersten Eingangsanschluss 150a geschaltet ist, und das selektiv einen Stromfluss von dem zweiten Ausgangsanschluss 152b zu dem ersten Eingangsanschluss 150a ermöglicht. Ein viertes Gleichrichterelement 154d ist zwischen den zweiten Ausgangsanschluss 152b und den zweiten Eingangsanschluss 150b geschaltet und ermöglicht selektiv einen Stromfluss von dem zweiten Ausgangsanschluss 152b zu dem zweiten Eingangsanschluss 150b. Ein sechstes Gleichrichterelement 154f ist beispielsweise zwischen den zweiten Ausgangsanschluss 152b und den dritten Eingangsanschluss 150c geschaltet und ermöglicht selektiv einen Stromfluss von dem zweiten Ausgangsanschluss 152b zu dem dritten Eingangsanschluss 150c.

Bei den Gleichrichterelementen 154a bis 154f kann es sich beispielsweise in einem einfachsten Fall um Dioden handeln. Andere, aktive Gleichrichterelemente sind aber auch denkbar, falls beispielsweise ein Spannungsabfall über dem Gleichrichter verringert werden soll.

Die Gleichrichteranordnung 150 kann somit insgesamt als B6-Gleichrichter betrachtet werden, mit dessen drei Eingängen ein erster Anschluss des Resonanzkreises (gebildet aus der Serienschaltung des Kondensators 120 und der ersten Sekundärwicklung 114) gekoppelt ist, mit dessen zweiten Eingangsanschluss der Abgriff 140 (der mit dem zweiten Anschluss des Resonanzkreises und dem ersten Anschluss der zweiten Sekundärwicklung gekoppelt ist) gekoppelt ist, und dessen dritter Eingangsanschluss mit dem zweiten Anschluss der zweiten Sekundärwicklung gekoppelt ist. Die beiden Ausgangsanschlüsse der Gleichrichteranordnung 150 sind, beispielsweise direkt oder über weitere Bauteile, mit zwei Anschlüssen einer Last (zum Beispiel der Last 170) gekoppelt (wobei die Last nicht zwingend Teil der Erfindung ist).

Die Kapazität 180 kann optional ersatzlos entfallen.

Was die Funktionsweise der Spannungswandlerschaltung anbelangt, so sei darauf hingewiesen, dass durch die Anregungsschaltung 104 eine Anregung erzeugt wird, die beispielsweise einen zeitlich variablen Strom durch die Primärwicklung 112 hervorruft. Der Stromfluss kann beispielsweise periodisch sein und ist bei einigen Ausführungsbeispielen näherungsweise sinusförmig.

In den Sekundärwicklungen 114, 116, die bevorzugt im gleichen Wicklungssinn gewickelt sind, werden durch die primärseitige Anregung Spannungen induziert. Eine Spannung über den Resonanzkreis, gebildet durch die den Kondensator 120 und die erste Sekundärwicklung 114, weist dabei einen Phasenversatz gegenüber der Spannung über der zweiten Sekundärwicklung 116 auf. Diesbezüglich sei angemerkt, dass bei diesem Ausführungsbeispiel, sowie bevorzugt auch bei den anderen Ausführungsbeispielen, keine weitere Kapazitäten zwischen den Abgriff und dem zweiten Eingang 150b der Gleichrichteranordnung sowie zwischen den zweiten Anschluss der zweiten Sekundärwicklung 116 und den dritten Eingangsanschluss 150c der Gleichrichteranordnung geschaltet sind. In anderen Worten, der Abgriff 140 und der zweite Anschluss der zweiten Sekundärwicklung sind beispielsweise gleichspannungsmäßig bzw. gleichstrommäßig mit den Eingangsanschlüssen 150b, 150c der Gleichrichteranordnung (bzw. mit den Gleichrichterelementen) gekoppelt. Hingegen ist der erste Anschluss der ersten Sekundärwicklung 114 über den Kondensator 120 mit dem ersten Eingangsanschluss 150a der Gleichrichteranordnung gekoppelt. Damit liegen zwischen den drei Paaren von Eingangsanschlüssen 150a, 150b, 150c der Gleichrichteranordnung 150 drei verschiedene Spannungen bzw. Spannungsverläufe an, die typischerweise unterschiedliche Amplituden, unterschiedliche Zeitverläufe und auch eine unterschiedliche Phasenlage aufweisen. Insbesondere ändert sich auch über der Zeit (zum Beispiel über einer Periode der Anregung) die Relation dieser Spannungen (Spannung 1: zwischen Anschlüssen 150a und 150b; Spannung 2: zwischen Anschlüssen 150b und 150c; Spannung 3: zwischen Anschlüssen 150a und 150c). Typischerweise fließt ein Strom von der Quelle der größten der drei Spannungen (Resonanzkreis; zweite Sekundärwicklung; Serienschaltung des Resonanzkreises und der zweiten Sekundärwicklung) zu der Last.

Nunmehr wurde erkannt, dass sich bei der vorliegenden Schaltungsanordnung für unterschiedliche Ausgangsspannungen unterschiedliche Verhältnisse einstellen. Insbesondere verändert sich ein effektives Spannungs-Übersetzungsverhältnis bzw. Strom-Übersetzungsverhältnis des Transformators 110 abhängig von der Ausgangsspannung an der Last 170. Dies wird beispielsweise bedingt dadurch, dass sich die Zeitanteile, während derer (beispielsweise innerhalb einer Periode der primärseitigen Anregung) ein Strom nur durch den Resonanzkreis (und dann über den Abgriff, aber nicht durch die zweite Sekundärwicklung) fließt, während derer ein Strom nur durch die zweite Sekundärwicklung (und über den Abgriff, aber nicht durch den Resonanzkreis 114, 120) fließt, und während derer ein Strom durch die Serienschaltung des Resonanzkreises 114, 120 und der zweiten Sekundärwicklung 116 (aber nicht über den Abgriff 140) fließt, abhängig von der Ausgangsspannung an der Last 170 verändern.

Es wurde erkannt, dass die hier beschriebene Schaltung daher mit vergleichsweise geringem Realisierungsaufwand gute Effizienzwerte bei deutlich unterschiedlichen Ausgangsspannungen erzielt.

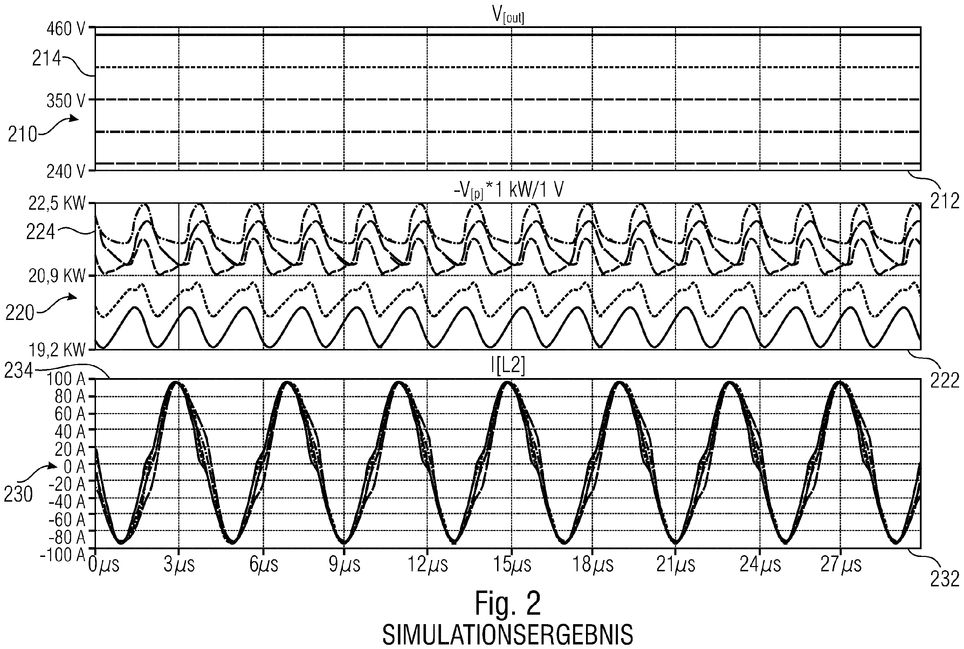

Im Folgenden werden einige Simulationsergebnisse anhand der Fig. 2 erläutert. Fig. 2 zeigt eine grafische Darstellung von Simulationsergebnissen, die sich beispielsweise bei der Spannungswandlerschaltung gemäß der Fig. 1 ergeben.

Eine erste Darstellung 210 zeigt einen zeitlichen Verlauf der Ausgangsspannung. Eine Abszisse 212 beschreibt die Zeit, und eine Ordinate 214 beschreibt die Ausgangsspannung. Fünf verschiedene Werte der Ausgangsspannung sind durch verschiedene Farben bzw. Linientypen gekennzeichnet.

Eine zweite Darstellung 220 zeigt einen zeitlichen Verlauf einer an die Last (beispielsweise eine Last 170) gelieferten Leistung. Eine Abszisse 222 beschreibt wiederum die Zeit, und eine Ordinate 224 beschreibt die Leistung. Es ist ersichtlich, dass die Leistung in einem Spannungsbereich zwischen 250 V und 450 V nur geringfügig, nämlich zwischen 19,2 kW und 22,5 kW variiert.

Eine dritte Darstellung 230 beschreibt einen Zeitverlauf eines Stroms durch die Induktivität 108a (L2). Eine Abszisse 232 beschreibt wiederum die Zeit und eine Ordinate 234 beschreibt den Strom durch die Induktivität 108a (bzw. durch die Primärwicklung 112). insbesondere ist ersichtlich, dass die Stromverläufe durch die Primärwicklung 112 bzw. durch die Induktivität 108a zumindest näherungsweise sinusförmig sind und für verschiedene Ausgangsspannungen in dem Bereich von 250 V bis 450 V nur geringfügige Unterschiede aufweisen.

Die geringe Veränderung des Eingangsstroms resultiert beispielsweise daraus, dass sich das effektive Spannungs-Transformationsverhältnis bzw. Strom-Transformationsverhältnis des Transformators 110 abhängig von der Ausgangsspannung an der Last 170 deutlich verändert. So sei darauf hingewiesen, dass bei einer vergleichsweise niedrigen Ausgangsspannung an der Last 170 naturgemäß ein deutlich höherer Strom fließen muss als bei einer höheren Ausgangsspannung an der Last, um eine näherungsweise gleiche Leistung zu erzielen. Wenngleich also bei dem vorliegenden Ausführungsbeispiel der an die Last 170 gelieferte Strom abhängig von der Ausgangsspannung an der Last deutlich variiert, so gibt es doch kaum eine Veränderung bei dem Strom durch die Primärwicklung. Dies entspricht einem veränderten (effektiven) Strom-Übersetzungsverhältnis, das sich bei einer niedrigen Ausgangsspannung an einer Last (im Vergleich zu einer größeren Ausgangsspannung an einer Last) ergibt.

Somit ist insgesamt festzuhalten, dass die Schaltungsanordnung 100 beispielsweise ohne Veränderung der Anregung auskommt, wenngleich sich die Ausgangsspannung an der Last deutlich ändert.

Im Übrigen sei darauf hingewiesen, dass das Ausführungsbeispiel gemäß der Fig. 1 um alle Merkmale, Funktionalitäten und Details ergänzt werden kann, die hierin beschrieben sind. Im Übrigen können die im Hinblick auf das Ausführungsbeispiel gemäß der Fig. 1 beschriebenen Merkmale, Funktionalitäten und Details auch in andere Ausführungsbeispiele übernommen werden, und zwar einzeln oder in Kombination.

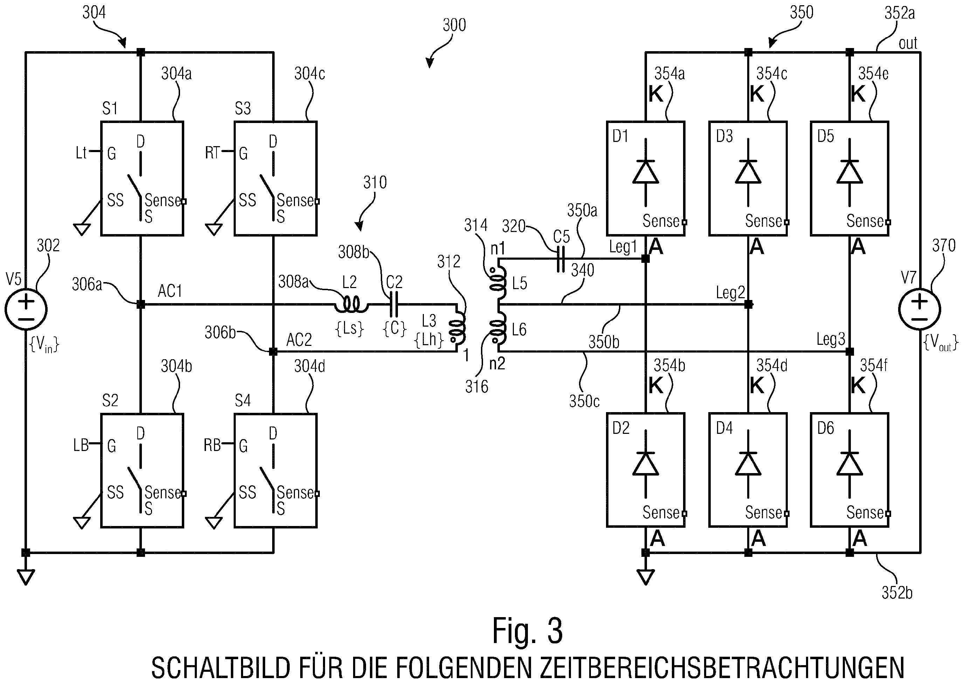

Ausführungsbeispiel gemäß der Fig. 3

Im Folgenden werden anhand des Ausführungsbeispiels gemäß der Fig. 3 detaillierte Erklärungen der Funktionsweise der Spannungswandlerschaltung gegeben.

Fig. 3 zeigt ein Schaltbild einer Spannungswandlerschaltung, gemäß einem Ausführungsbeispiel der vorliegenden Erfindung. Insbesondere zeigt die Fig. 3 ein zugrunde liegendes Schaltbild einer Spannungswandlerschaltung, die für die folgenden Zeitbereichsbetrachtungen herangezogen wird.

Die Spannungswandlerschaltung 300 gemäß der Fig. 3 ist sehr ähnlich zu der Spannungswandlerschaltung 100 gemäß der Fig. 1, so dass hier auf eine erneute detaillierte Beschreibung verzichtet wird. Vielmehr wird auf die obigen Ausführungen verwiesen.

Insbesondere sei darauf hingewiesen, dass in dem Schaltbild der Fig. 3 Elemente, die Elementen in dem Schaltbild der Fig. 1 entsprechen, mit um 200 höheren Bezugszeichen versehen sind. Die Funktionalität der entsprechenden Elemente ist entsprechend, so dass Erklärungen, die im Hinblick auf die Schaltung 300 gemäß der Fig. 3 abgegeben werden, auch auf die Schaltung 100 gemäß der Fig. 1 übertragen werden können (aber nicht übertragen werden müssen). Umgekehrt können auch Erläuterungen im Hinblick auf die Schaltung 100 auf die Schaltung 300 übertragen werden.

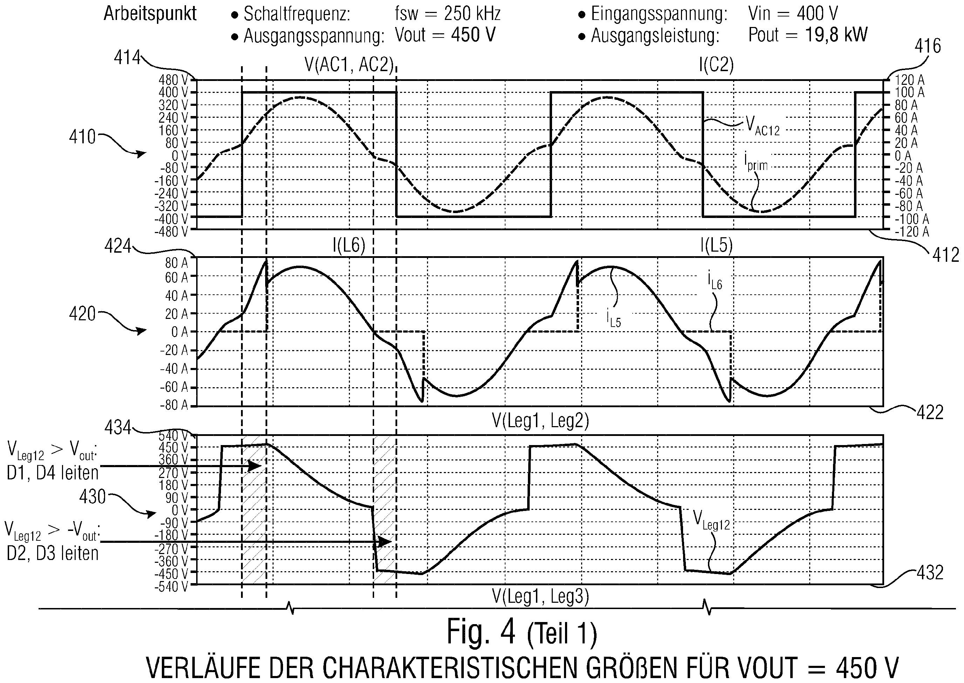

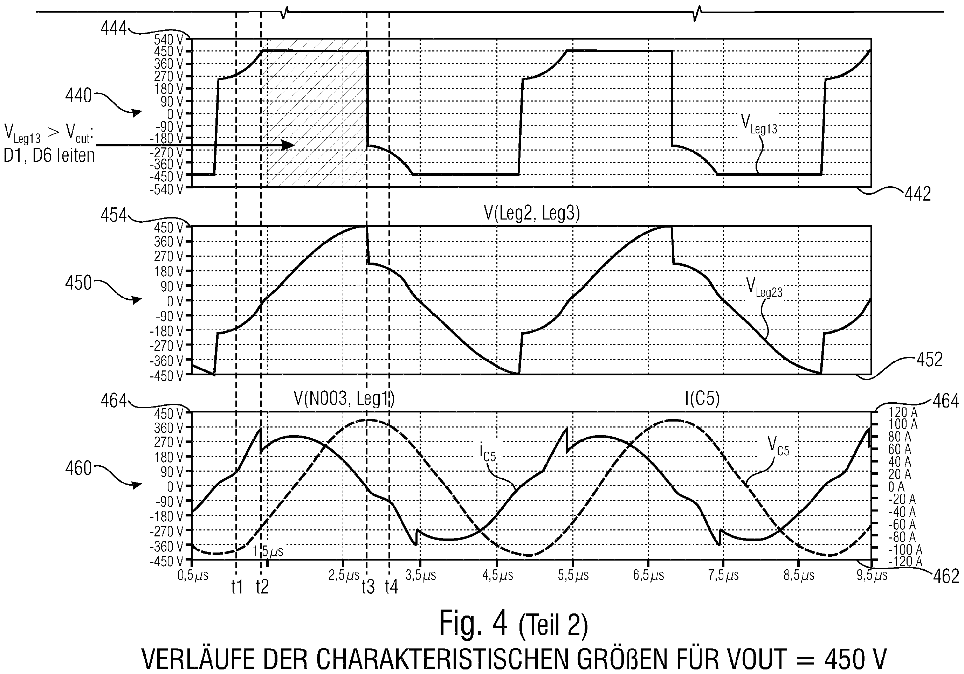

Fig. 4 zeigt eine schematische Darstellung von Verläufen von charakteristischen Größen in der Spannungswandlerschaltung 300 für eine Ausgangsspannung VOUT = 450 V. Die Signalverläufe, die in der Fig. 4 gezeigt sind, basieren beispielsweise auf einer Schaltfrequenz von 250 kHz, einer Ausgangsspannung von 450 V, und einer Eingangsspannung von 400 V. Eine (mittlere) Ausgangsleistung in dem Betriebszustand, wie er in der Fig. 4 dargestellt ist, beträgt etwa 19,8 kW.

Eine erste grafische Darstellung 410 beschreibt einen zeitlichen Verlauf der Spannung $V_{AC12}$ zwischen dem ersten Brückenknoten 306a und dem zweiten Brückenknoten 306b sowie einen zeitlichen Verlauf des Stromflusses durch die Induktivität 308a (L2) bzw. durch die Primärwicklung 312 (L3). Die Abszisse 412 beschreibt die Zeit, und eine erste Ordinate 414 beschreibt die Spannung und eine zweie Ordinate 416 beschreibt den Strom.

Es ist ersichtlich, dass die Spannung $V_{AC12}$ zwischen den Knoten 306a und 306b beispielsweise ein Rechtecksignal mit einer Periodendauer von etwa 4 Mikrosekunden ist (entspricht der Schaltfrequenz von 250 kHz). Die Spannung $V_{AC12}$ (die als Anregungsspannung betrachtet werden kann) weist einen symmetrischen Verlauf und ein Tastverhältnis von beispielsweise 50% auf. Der Strom durch die Induktivität 308a weist einen zumindest näherungsweise sinusförmigen Verlauf auf. Der Stromverlauf des Stroms $i_{prim}$ eilt im Übrigen der Anregungsspannung $V_{AC12}$ etwas voraus (beispielsweise um weniger als 45°).

Eine zweite grafische Darstellung 420 beschreibt Stromverläufe durch die erste Sekundärwicklung 314 ($i_{L5}$) und durch die zweite Sekundärwicklung 316 ($i_{L6}$). Eine Abszisse 422 beschreibt die Zeit, und eine Ordinate 424 beschreibt den Strom. Es ist beispielsweise ersichtlich, dass zwischen den Zeiten t1 und t2 der Strom durch die zweite Sekundärwicklung 316 etwa gleich null ist, während der Strom durch die erste Sekundärwicklung bzw. durch den Resonanzkreis 320, 314 deutlich größer als null ist. Dies bedeutet im Ergebnis, dass ein Strom zu einem positiven Knoten bzw. Anschluss der Last nur durch den Resonanzkreis aber nicht durch die zweite Sekundärwicklung 316 (sondern über den Abgriff 340) fließt.

In dem Zeitraum zwischen t2 und t3 ist der Strom durch erste Sekundärwicklung 314 gleich dem Strom durch die zweite Sekundärwicklung 316. In dem Zeitraum zwischen t2 und t3 steigt der Strom erst leicht an und fällt dann ab. Zum Zeitpunkt t3 erreicht der Strom einen Nulldurchgang. Dies bedeutet effektiv, dass zwischen t2 und t3 der Strom zu dem positiven Knoten bzw. Anschluss der Last 370 durch die Serienschaltung der beiden Sekundärwicklungen 314, 316 fließt, während kein Strom über den Abgriff 340 fließt.

Zwischen den Zeitpunkten t3 und t4 ist der Strom durch die zweite Sekundärwicklung 316 wieder null und es fließt ein ansteigender Strom durch die ersten Sekundärwicklung 314 bzw. durch den Resonanzkreis 320, 314, der allerdings entgegengesetzte Richtung hat wie zwischen den Zeiten t1 und t3.

Im Folgenden werden die verschiedenen an den Eingängen bzw. Eingangs-Anschlüssen 350a, 350b, 350c der Gleichrichteranordnung anliegenden Spannungen erläutert. Eine grafische Darstellung 430 beschreibt die Spannung zwischen dem ersten Anschluss 350a und dem zweiten Anschluss 350b der Gleichrichteranordnung. Eine Abszisse 432 beschreibt die Zeit und eine Ordinate 434 beschreibt die Spannung. Es ist hier ersichtlich, dass die Spannung $V_{Leg12}$, die zwischen dem ersten Anschluss 350a und dem zweiten Anschluss 350b anliegt, zwischen den Zeitpunkten t1 und t2 bereits den Wert der Ausgangsspannung (450 V) erreicht hat, während die anderen beiden Spannungen ($V_{Leg13}$ und $V_{Leg23}$) in diesem Zeitraum noch eine kleinere Spannung aufweisen.

Eine grafische Darstellung 440 zeigt den Verlauf der Spannung $V_{Leg13}$ zwischen dem ersten Anschluss 350a und dem dritten Anschluss 350c der Gleichrichteranordnung. Eine Abszisse 442 beschreibt die Zeit und eine Ordinate 444 beschreibt die Spannung.

Im Übrigen zeigt eine Darstellung 450 einen zeitlichen Verlauf der Spannung $V_{Leg23}$ zwischen den Anschlüssen 350b und 350c der Gleichrichteranordnung. Eine Abszisse 452 beschreibt die Zeit und eine Ordinate 454 beschreibt die Spannung.

Wie bereits oben erläutert hat die Spannung $V_{Leg12}$ zwischen den Zeitpunkten t1 und t2 bereits den Wert von 450 V der Ausgangsspannung erreicht, so dass ein Stromfluss durch die Gleichrichterelemente 354a (D1) und 354d (D4) erfolgt.

In dem Zeitraum von t2 bis t3 erreicht die Spannung $V_{Leg13}$ den Wert der Ausgangsspannung (450 V), während hingegen die Spannung $V_{Leg12}$ in dem Zeitraum zwischen t2 und t3 sinkt und insbesondere kleiner wird als die Spannung $V_{Leg13}$. In dem Zeitraum zwischen t2 und t3 ist die Spannung $V_{Leg13}$ somit größer als die Spannung $V_{Leg12}$ (und auch größer als die Spannung $V_{Leg23}$). Daher leiten die Gleichrichterelemente 354a (D1) und 354f (D6), und der Stromfluss zu dem positiven Knoten oder Anschluss der Last 370 fließt durch die Serienschaltung des Resonanzkreises 314, 320 und der zweiten Sekundärwicklung 316. Über den Abgriff 340 fließt in dem Zeitraum zwischen t2 und t3 kein Strom.

Es ist dabei ersichtlich, dass die Spannung $V_{Leg23}$ zwischen den Zeitpunkten t1 und t4 (betragsmäßig) stets kleiner ist als die jeweils größere der Spannungen $V_{Leg12}$ und $V_{Leg13}$. Somit fließt zu keinem Zeitpunkt ein Strom allein durch die zweite Sekundärwicklung 316 (und über den Abgriff 340) zu dem positiven Knoten oder Anschluss der Last.

Eine Darstellung 460 zeigt Spannungsverläufe und Stromverläufe an dem Kondensator 320. Eine Abszisse 462 beschreibt die Zeit, eine erste Ordinate 464 beschreibt die Spannung über dem Kondensator und eine zweite Ordinate 464 beschreibt den Strom durch den Kondensator. Diesbezüglich sei darauf hingewiesen, dass der Strom $i_{C5}$ durch den Kondensator gleich dem Strom durch die erste Sekundärwicklung 314 ist, wie er in der Darstellung 420 gezeigt ist. Die Kondensatorspannung $V_{C5}$ ist zumindest näherungsweise sinusförmig.

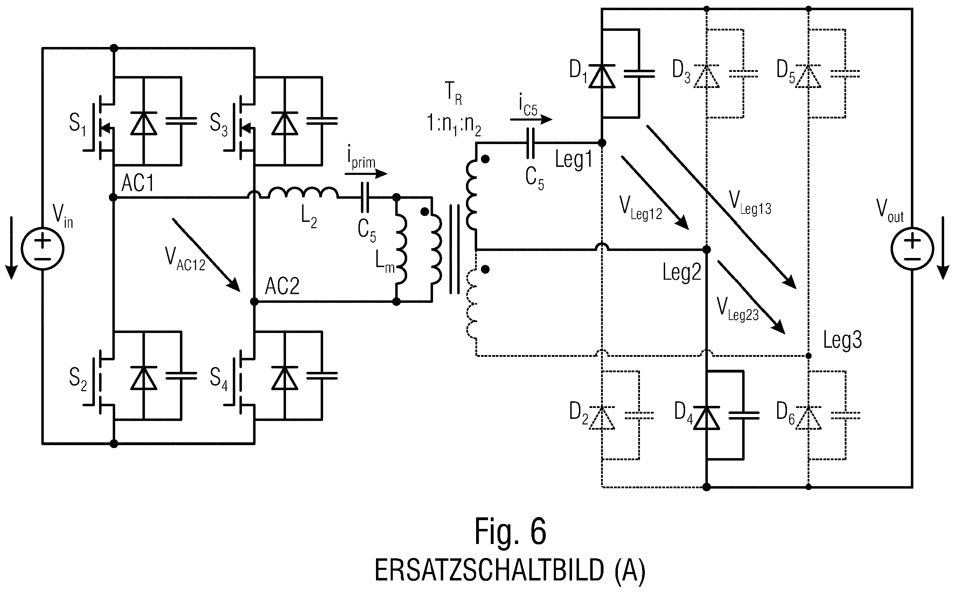

Im Folgenden werden weitere Details im Hinblick auf die zeitlichen Verläufe für $V_{out}$ = 450 V, die in der Fig. 4 gezeigt sind, erläutert. Dabei wird auch auf die Ersatzschaltbilder, die in den Figuren 6 bis 10 gezeigt sind, Bezug genommen.

Diesbezüglich sei darauf hingewiesen, dass die Fig. 6 ein Ersatzschaltbild der Spannungswandlerschaltung 300 beschreibt, wenn die Spannung $V_{Leg12}$ größer ist als die Spannungen $V_{Leg13}$ und $V_{Leg23}$. In diesem Fall leiten die Gleichrichterelemente 354a und 354d (beispielsweise die Dioden D1 und D4). Die Gleichrichterelemente sind hierbei jeweils als Dioden mit einer, beispielsweise parasitären, Parallelkapazität gezeigt. Aktive Gleichrichterelemente können aber ebenfalls verwendet werden.

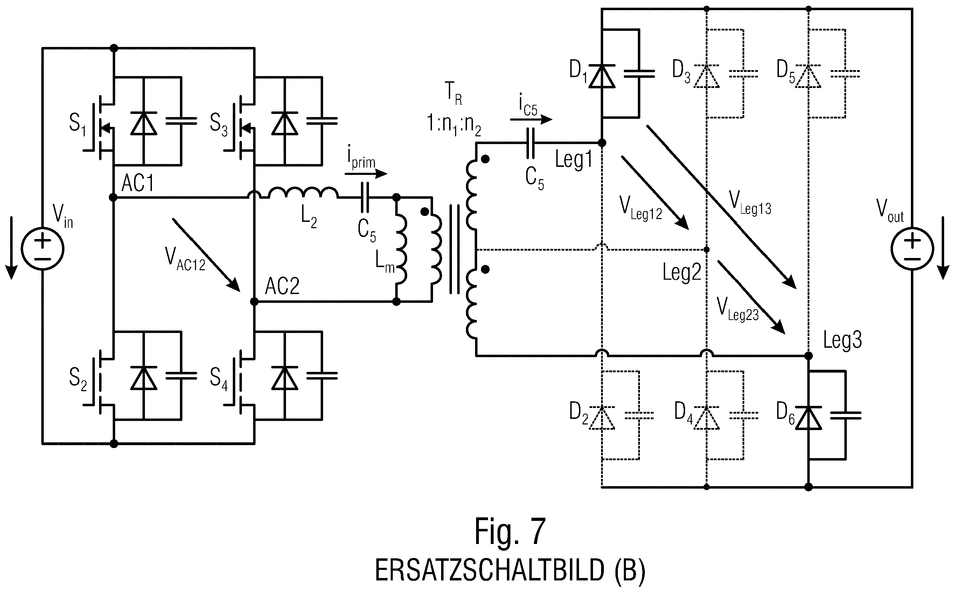

Fig. 7 zeigt ein Ersatzschaltbild der Schaltung 300 für den Fall, dass die Spannung $V_{Leg13}$ (über der Serienschaltung des Resonanzkreises und der zweiten Sekundärwicklung) größer ist als die Spannung $V_{Leg12}$ und $V_{Leg23}$. In diesem Fall leiten die Gleichrichterelemente 354a und 354f (beispielsweise die Dioden D1 und D6).

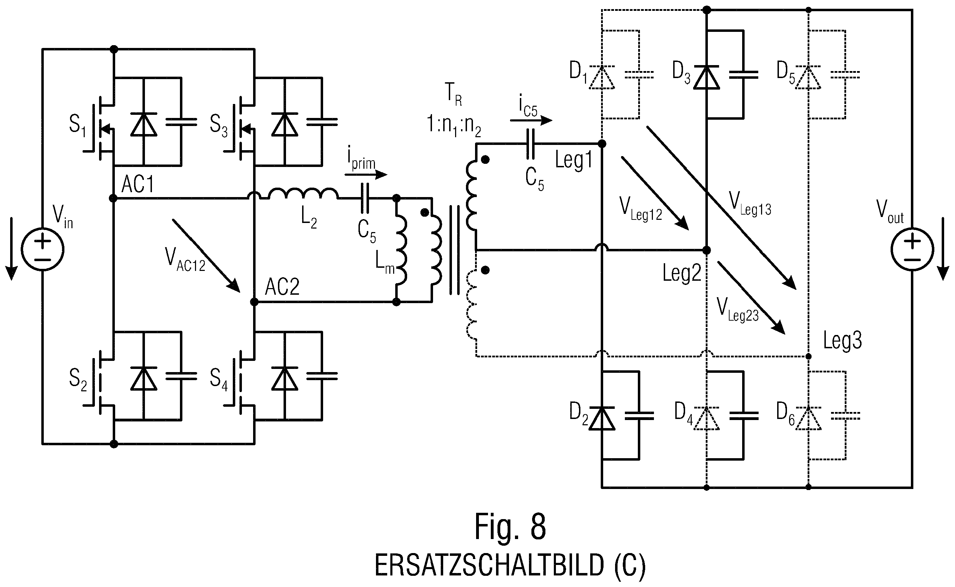

Fig. 8 zeigt ein Ersatzschaltbild der Schaltung 300 in dem Fall, dass die Spannung $V_{Leg12}$ betragsmäßig größer als die Spannungen $V_{Leg13}$ und $V_{Leg23}$ aber negativ ist. In diesem Fall leiten die Gleichrichterelemente 354c, 354b (beispielsweise die Dioden D3 und D2).

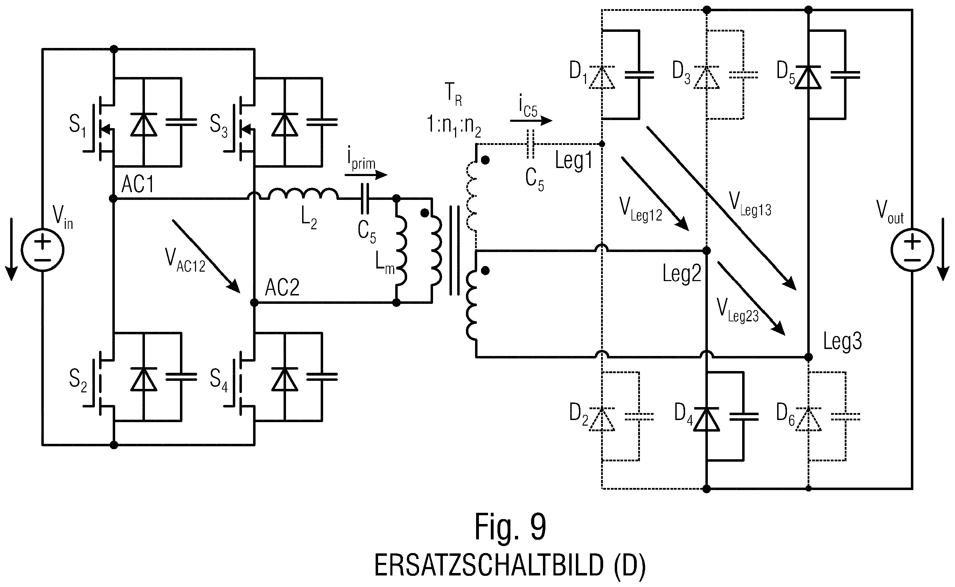

Fig. 9 zeigt ein Ersatzschaltbild der Schaltung 300 für den Fall, dass die Spannung $V_{Leg23}$ betragsmäßig größer ist als die Spannung $V_{Leg12}$ und $V_{Leg13}$, aber negativ ist. In diesem Fall leiten die Gleichrichterelemente 354e und 354d (beispielsweise die Dioden D5 und D4).

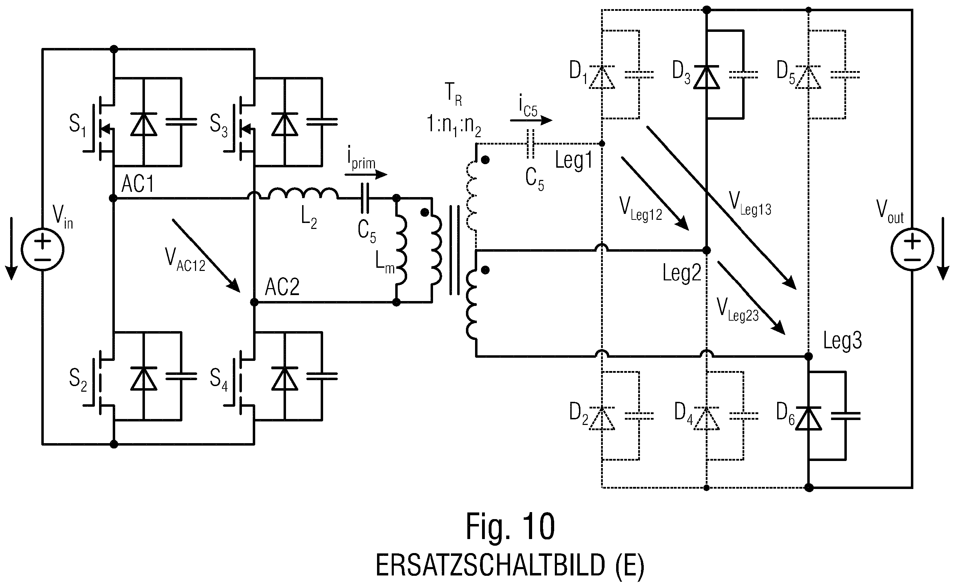

Fig. 10 zeigt ein Ersatzschaltbild der Schaltung 300 für den Fall, dass die Spannung $V_{Leg23}$ größer ist als die Spannungen $V_{Leg12}$ und $V_{Leg13}$. In diesem Fall leiten die Gleichrichterelemente 354c, 354f (beispielsweise die Dioden D3 und D6).

Im Folgenden wird das Schaltungsverhalten in den verschiedenen Zeitabschnitten beschrieben. Aus Gründen der Einfachheit wird jeweils auf Dioden Bezug genommen, wobei die Erläuterungen natürlich für andere Gleichrichterelemente ihre Gültigkeit behalten.

Zeitabschnitt t1-t2 (es gilt Ersatzschaltbild (A), Fig. 6).

Zum Zeitpunkt t = t1 beginnt die erste Hälfte der Schaltperiode und der primärseitige Inverter (beispielsweise die Brückenschaltung 304) schaltet die Eingangsspannung $+V_{in}$ = +400 V auf den primärseitigen Resonanzkreis (beispielsweise mit den Induktivitäten 108a, 112 und der Kapazität 108b) auf. Im Folgenden bildet sich ein sinusförmiger Resonanzkreisstrom $i_{prim}$ aus (beispielsweise durch die Induktivität 108a, die Kapazität 108b und die Primärwicklung 112). Zum Zeitpunkt t = t1 ist die notwendige Bedingung

$$V_{Leg12} > V_{out} = 450 \text{ V}$$

bereits erfüllt, so dass die Dioden D1, D4 sich in leitendem Zustand befinden und der sekundärseitige Resonanzkreis-Strom durch die genannten Dioden ebenfalls sinusförmig ansteigt (vgl. Strom $i_{L5}$). Dies spiegelt sich ebenfalls im Strom $i_{C5}$ durch den sekundärseitigen Kondensator C5 wider, sowie im positiven Strom $i_{L5}$.

Zu dem Zeitpunkt t = t2 ist durch die Aufladung des sekundärseitigen Kondensators C5 durch den sekundärseitigen Strom die Bedingung

$$V_{Leg13} > V_{out} = 450\ V$$

erfüllt, so dass die zuvor leitende Diode D4 in den sperrenden Zustand übergeht und Diode D6 zu leiten beginnt und den sekundärseitigen Strom übernimmt.

Zeitabschnitt t2-t3 (es gilt Ersatzschaltbild (B), Fig. 7)

Die Dioden D1, D6 leiten. Die gesamte Sekundärseite des Transformators ist nun an der Energieübertragung beteiligt, ersichtlich aus den beiden positiven Strömen $i_{L5}$ und $i_{L6}$. Zu diesem Zeitpunkt fließt kein Strom in oder aus der Mittelanzapfung 340 zwischen L5 und L6. Der sekundärseitige Resonanzstrom lädt die sekundärseitige Kapazität C5 weiter auf bis zu ihrem Spitzenwert $v_{C5\ max}$ bei t = t3. Die Spannung $V_{Leg23}$ baut sich im vorliegenden Intervall sinusförmig auf, erreicht jedoch bei t = t3 nicht die notwendige Bedingung

$$v_{Leg13} > V_{out} = 450\ V,$$

so dass die Diode D3 nicht in den leitenden Zustand kommt.
Zum Zeitpunkt t = t3 geht der sekundärseitige Resonanzstrom durch Null, erkennbar im Verlauf von $i_{L5}$. Die Dioden D1, D6 gehen in den sperrenden Zustand über, die Dioden D2, D3 übernehmen den nun negativen Stromfluss auf der Sekundärseite.

Zeitabschnitt t3-t4 (es gilt Ersatzschaltbild (C), Fig. 8)

Die Dioden D2, D3 leiten, der sekundärseitige Resonanzstrom entlädt die Kapazität C5. Die erste Hälfte der Schaltperiode endet bei t = t4 mit dem Umschalten des primärseitigen Inverters.
Die zweite Hälfte der Schaltperiode ist zur ersten Hälfte symmetrisch, lediglich die Vorzeichen der Ströme und Spannungen invertieren sich.
Für den hier betrachteten Arbeitspunkt bei $V_{out}$ = 450 V ist die Leitbedingung für die Diodenkombination D3, D6 für eine positive Eingangsspannung $V_{in}$ = 400 V nie erfüllt. Das heißt, für die hier vorliegende hohe Ausgangsspannung fließt der sekundärseitige Resonanzstrom, welcher gleichgerichtet dem Laststrom am Ausgang entspricht, stets über den Kondensator C5.
Innerhalb der betrachteten halben Schaltperiode wechseln sich die Arbeitszyklen des Gleichrichters derart ab, dass zunächst nur die Induktivität L5 der zweigeteilten sekundärseitigen Wicklung (auch als erste Sekundärwicklung bezeichnet) am Vorgang der Energieübertragung auf die Ausgangsseite beteiligt ist. Das heißt, es wirkt im Zeitabschnitt t1-t2 das Windungszahlenverhältnis 1:n1 zwischen L3 und L5 (also zwischen der Primärwicklung 312 und der ersten Sekundärwicklung 314).
Ab t = t2 wird für den Energietransfer die gesamte sekundärseitige Wicklung genutzt (also beispielsweise sowohl die erste Sekundärwicklung 114 als auch die zweite Sekundärwicklung 116). Das Durchschalten der Dioden D1, D6 bewirkt die Serienschaltung von L5 und L6 Es wirkt somit das Windungszahlenverhältnis 1:(n1 + n2) für den primärseitigen Resonanzkreis.
Am Ende der halben Schaltperiode wirkt, jetzt durch das negative Vorzeichen des primärseitigen Stromes, wieder das Windungszahlenverhältnis 1:n1, d. h. nur L5 (die erste Sekundärwicklung) ist an der Energieübertragung und am resonanten Vorgang beteiligt.
In anderen Worten, zwischen den Zeitpunkten t3 und t4 fließt kein Strom durch die zweite Sekundärwicklung 316, so dass diese nicht an der Energieübertragung beteiligt ist, und so dass deren Windungszahl n2 nicht in das effektive Windungszahlenverhältnis einfließt.
Im Folgenden werden zeitliche Verläufe der Schaltung 300 für eine Ausgangsspannung $V_{out}$ = 250 V beschrieben.

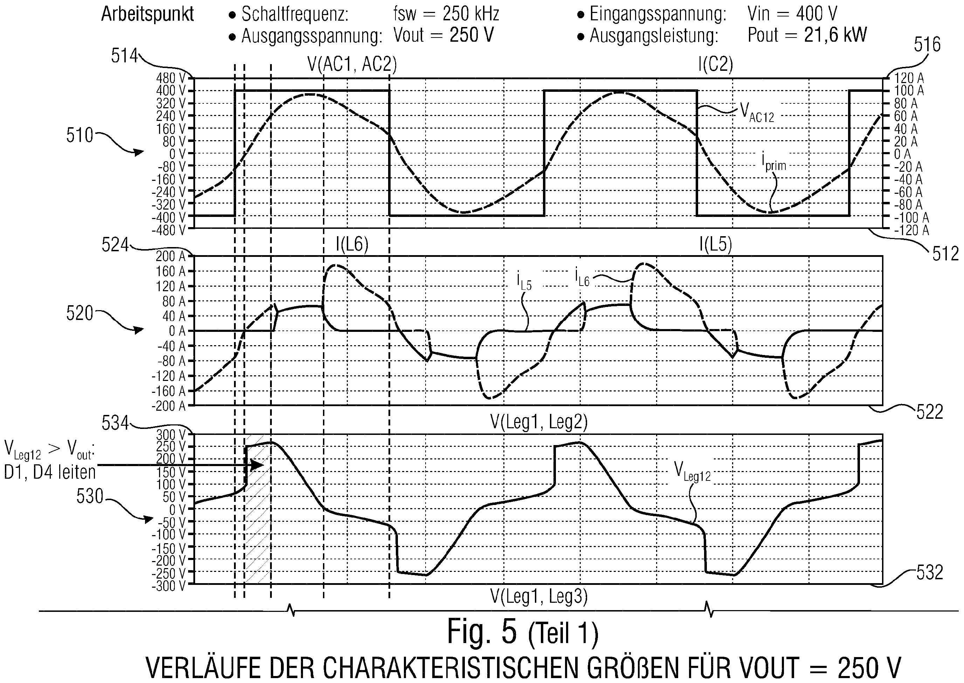

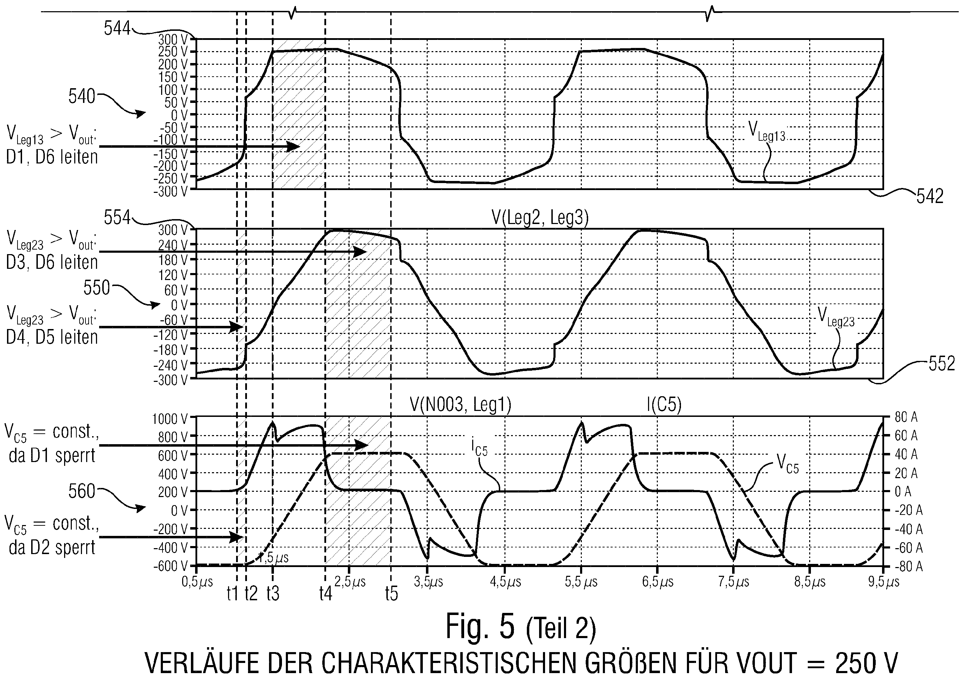

Fig. 5 zeigt hier eine grafische Darstellung der zeitlichen Verläufe der charakteristischen Größen für $V_{out}$ = 250 V. Als Arbeitspunkt wird hier angenommen, dass die Schaltfrequenz (wiederum, wie auch schon bei der Ausgangsspan-

nung von $V_{out}$ = 450 V) 250 kHz beträgt. Die Eingangsspannung ist $V_{in}$ = 400 V, und die (mittlere) Ausgangsleistung $P_{out}$ beträgt 21,6 kW. Die Ausgangsleistung ist also etwas höher (etwa 10% höher) als die Ausgangsleistung bei der Ausgangsspannung $V_{out}$ = 450 V. Allerdings sei darauf hingewiesen, dass eine schwankende Ausgangsleistung von +/-10% oder von +/-20% zwischen den verschiedenen Ausgangsspannungen (250 V und 450 V) durchaus tolerierbar ist.

Die Ausgangsleistung kann optional in einem Produkt durch Frequenz/Phasenverschiebung geregelt werden. Die Simulation zeigt aber, dass schon ohne Regeleingriff der Zielbereich fast erreicht werden kann.

Eine erste graphische Darstellung 510 beschreibt einen zeitlichen Verlauf der Anregungsspannung $V_{AC12}$ zwischen den Brückenknoten 306a und 306b sowie einen Verlauf des Stroms durch die Serienschaltung der Induktivität 308a, der Kapazität 308b und der Primärwicklung 312 (iprim). Eine Abszisse 512 beschreibt die Zeit und eine erste Ordinate 514 beschreibt die Spannung und eine zweite Ordinate 516 beschreibt den Strom. Es ist ersichtlich, dass die Anregungsspannung $V_{AC12}$ einen im Wesentlichen rechteckförmigen Verlauf aufweist und ein Tastverhältnis von etwa 50% aufweist. Eine Periodendauer beträgt etwa 4 Mikrosekunden und die erste Hälfte einer Periode beginnt beispielsweise bei t1 und endet bei t5. Der Strom $i_{prim}$ durch die Elemente 308a, 308b, 312 ist zumindest näherungsweise sinusförmig, wobei der Zeitverlauf bei einer Ausgangsspannung von 250 V sich etwas von dem Zeitverlauf bei einer Ausgangsspannung von 450 V unterscheidet. Allerdings sei darauf hingewiesen, dass die Amplitude des Zeitverlaufs von $i_{prim}$ sich zwischen den Ausgangsspannungen 250 V und 450 V nur geringfügig (beispielsweise um höchstens 10%) unterscheidet.

Eine grafische Darstellung 520 beschreibt Zeitverläufe des Stroms $i_{L5}$ durch den (sekundärseitigen) Resonanzkreis bzw. durch die erste Sekundärwicklung 314 und den Kondensator 320 sowie den Strom $i_{L6}$ durch die zweite Sekundärwicklung 316. Eine Abszisse 522 beschreibt die Zeit und eine Ordinate 524 beschreibt den Strom.

Beispielsweise fließt zu Beginn einer Periode der Anregungsspannung, also zwischen den Zeiten t1 und t2 ein Strom durch die zweite Sekundärwicklung 316, während durch die erste Sekundärwicklung 314 kein Strom (oder nur ein vernachlässigbarer Strom) fließt. Allerdings sei darauf hingewiesen, dass zwischen den Zeiten t1 und t2 der Strom durch die zweite Sekundärwicklung 316 negatives Vorzeichen hat.

Zum Zeitpunkt t2 ändern sich die Verhältnisse, und zwischen den Zeiten t2 und t3 fließt ein Strom (in positiver Richtung) durch die erste Sekundärwicklung 314 (bzw. den Resonanzkreis), während hingegen der Strom durch die zweite Sekundärwicklung 316 gleich null ist. Zwischen den Zeiten t1 und t3 fließt also jeweils ein Strom nur durch eine der Sekundärwicklungen sowie über den Abgriff.

Zu einem Zeitpunkt t3 ändern sich die Verhältnisse wiederum, und es fließt der gleiche Strom durch die erste Sekundärwicklung 314 und durch die zweite Sekundärwicklung 316. Somit fließt der gleiche Strom durch beide Sekundärwicklungen 314, 316 und der Strom über dem Abgriff 340 wird zu null. Beide Sekundärwicklungen sind also zwischen den Zeiten t3 und t4 wirksam.

Ab dem Zeitpunkt t4 wird der Strom $i_{L5}$ durch die erste Sekundärwicklung 314 zu null, während hingegen der Strom durch die zweite Sekundärwicklung 316 zunächst ansteigt, dann aber wieder abfällt.

Zu dem Zeitpunkt t5 fließt somit ein Strom in positiver Richtung durch die zweite Sekundärwicklung 316, während ein Strom durch die erste Wicklung 314 (bzw. durch den Resonanzkreis) gleich null ist.

Während der zweiten Halb-Periode des Anregungssignals setzt sich der Vorgang dann mit umgekehrten Vorzeichen entsprechend fort, wie aus der Fig. 5 ohne Weiteres ersichtlich ist.

Somit ist festzuhalten, dass bei der Ausgangsspannung von 250 V der Strom nur während eines vergleichsweise kurzen Zeitraums (zwischen den Zeiten t3 und t4) durch beide Sekundärwicklungen 314, 316 fließt, so dass der Abgriff ohne Stromfluss ist. Während eines überwiegenden Zeitraums hingegen fließt ein Strom nur durch eine der Sekundärwicklungen 314, 316, so dass eine effektives Strom-Übersetzungsverhältnis bzw. Spannungs-Übersetzungsverhältnis des Transformators 310 durch die einzelnen Sekundärwicklungen (und nicht durch die Serienschaltung der Sekundärwicklungen) dominiert wird.

Die grafische Darstellung 530 zeigt einen Verlauf der Spannung $V_{Leg12}$ zwischen dem ersten Eingangsanschluss 350a und dem zweiten Eingangsanschluss 350b der Gleichrichteranordnung 350. Eine Abszisse 532 beschreibt die Zeit und eine Ordinate 534 beschreibt die Spannung.

Eine grafische Darstellung 540 beschreibt einen zeitlichen Verlauf der Spannung $V_{Leg13}$ zwischen dem ersten Eingangsanschluss 350a und dem dritten Eingangsanschluss 350c der Gleichrichteranordnung 350. Eine Abszisse 542 beschreibt die Zeit und eine Ordinate 544 beschreibt die Spannung.

Eine grafische Darstellung 550 zeigt einen Zeitverlauf der Spannung $V_{Leg23}$ zwischen dem zweiten Eingangsanschluss 350b und dem dritten Eingangsanschluss 350c der Gleichrichteranordnung 350. Eine Abszisse 552 beschreibt die Zeit und eine Ordinate 554 beschreibt die Spannung.

Es ist hierbei ersichtlich, dass zwischen den Zeiten t1 und t2 ein Betrag der Spannung $V_{Leg23}$ größer ist als ein Betrag der Spannungen $V_{Leg13}$ und $V_{Leg12}$, wobei die Spannung $V_{Leg23}$ insgesamt negativ ist. In Anbetracht dessen leiten zwischen den Zeiten t1 und t2 die Gleichrichterelemente 354d und 354e (D4, D5), und ein Strom fließt (mit negativen Vorzeichen) durch die zweiten Sekundärwicklung 316 und über den Abgriff 340.

Zwischen den Zeiten t2 und t3 ist der Betrag der Spannung $V_{Leg12}$ größer als der Betrag der Spannung $V_{Leg13}$

und auch größer als der Betrag der Spannung $V_{Leg23}$. Daher leiten zwischen den Zeiten t2 und t3 die Gleichrichterelemente 354a und 354d (zum Beispiel D1 und D4). Entsprechend fließt ein Strom durch die erste Sekundärwicklung 314 und den Kondensator 320, also durch den (sekundärseitigen) Resonanzkreis, und über den Abgriff 340.

In einem Zeitraum zwischen t3 und t4 ist der Betrag der Spannung $V_{Leg13}$ größer als der Betrag der Spannung $V_{Leg12}$, da diese Spannung wieder abfällt, und auch größer als der Betrag der Spannung $V_{Leg23}$. Daher leiten zwischen den Zeiten t3 und t4 die Gleichrichterelemente 354a und 354f (zum Beispiel Dioden D1, D6) und der Strom fließt sowohl durch die erste Sekundärwicklung 314 als auch die zweite Sekundärwicklung 316, wobei der Abgriff 340 stromlos bleibt. Somit sind nunmehr beide Sekundärwicklungen wirksam.

Die Verhältnisse ändern sich zum Zeitpunkt t4 und zwischen den Zeitpunkten t4 und t5 ist der Betrag die Spannung $V_{Leg23}$ größer als der Betrag der Spannung $V_{Leg12}$ und auch größer als der Betrag der Spannung $V_{Leg13}$. Daher leiten zwischen den Zeitpunkten r4 und t5 die Gleichrichterelemente 154c und 154f (beispielsweise die Dioden D3 und D6), und der Strom fließt durch die zweite Sekundärwicklung 316 und über den Abgriff 340. Die erste Sekundärwicklung 314 ist zwischen den Zeitpunkten t4 und t5 nicht wirksam.

Insgesamt ist somit ersichtlich, dass zwischen den Zeiten t1 und t3 und zwischen den Zeiten t4 und t5 nur eine der Sekundärwicklungen wirksam ist (von dem Strom durchflossen wird), und dass nur zwischen den Zeiten t3 und t4 beide Sekundärwicklungen wirksam sind (von einem Strom durchflossen werden). Ein effektives Spannungs-Übersetzungsverhältnis bzw. Strom-Übersetzungsverhältnis des Transformators 310 wird daher vornehmlich durch die einzelnen Sekundärwicklungen dominiert und nicht durch die Serienschaltung der Sekundärwicklungen.

Im Folgenden werden weitere Erläuterungen zu den zeitlichen Verläufen für die Ausgangsspannung $V_{out}$ = 250 V gegeben.

Zeitabschnitt t1-t2 (es gilt Ersatzschaltbild (D) gemäß Fig. 9)

Zum Zeitpunkt t = t1 beginnt die erste Hälfte der Schaltperiode und der primärseitige Inverter (zum Beispiel die Brückenschaltung 304a, 304b, 304c, 304d) schaltet die Eingangsspannung $+V_{in}$ = +400 V auf den primärseitigen Resonanzkreis (zum Beispiel mit Elementen 308a, 308b, 312) auf Im Folgenden bildet sich ein sinusförmiger Resonanzkreisstrom $i_{prim}$ aus. Zu dem Zeitpunkt t = t1 ist der primärseitige Resonanzstrom noch negativ und die notwendige Bedingung

$$V_{Leg23} < -V_{out} = -250 \text{ V}$$

bereits erfüllt, so dass die Gleichrichterelemente bzw. Dioden D4, D5 sich im leitenden Zustand befinden und der sekundärseitige Resonanzkreisstrom durch die genannten Dioden ebenfalls sinusförmig ansteigt. Da in diesem Arbeitszyklus nur die untere sekundärseitige Wicklung L6 an dem resonanten Vorgang beteiligt ist, stellt sich kein Strom $i_{C5}$ durch den sekundärseitigen Kondensator C5 ein.

Zu dem Zeitpunkt t = t2 geht der sekundärseitige Resonanzstrom durch null und die Dioden D4, D5 gehen in den sperrenden Zustand über, während der sekundärseitige Resonanzstrom auf die Dioden D1, D4 kommutiert.

Zeitabschnitt t2-t3 (es gilt Ersatzschaltbild (A), Figur 6)

Die Dioden D1, D4 leiten, der primärseitige Resonanzstrom $i_{prim}$ steigt sinusförmig an. Dies spiegelt sich ebenfalls im Strom $i_{C5}$ durch den sekundärseitigen Kondensator C5 wider, sowie im positiven Strom IL5.

Zum Zeitpunkt t = t3 ist durch die Aufladung des sekundärseitigen Kondensators C5 durch den sekundärseitigen Strom die Bedingung

$$V_{Leg13} > V_{out} = 250 \text{ V}$$

erfüllt, so dass die zuvor leitende Diode D4 in den sperrenden Zustand übergeht und die Diode D6 zu leiten beginnt und den sekundärseitigen Strom übernimmt.

Zeitabschnitt t3-t4 (es gilt Ersatzschaltbild (B), Figur 7)

Die Dioden D1, D6 leiten. Die gesamte Sekundärseite des Transformators ist nun an der Energieübertragung beteiligt, ersichtlich aus den beiden positiven Strömen $i_{L5}$ und $i_{L6}$. Zu diesem Zeitpunkt (bzw. in diesem Zeitraum) fließt kein Strom in oder aus der Mittelanzapfung zwischen L5 und L6. Der sekundärseitige Resonanzstrom lädt die sekundärseitige Kapazität C5 weiter auf bis zu ihrem Spitzenwert $v_{C5,max}$ bei t = t4. Die Spannung $V_{Leg23}$ baut sich im vorliegenden Intervall sinusförmig auf und erreicht für t = t4 die notwendige Bedingung

$$V_{Leg13} > V_{out} = 250 \, V$$

Die Diode D1 beginnt zu sperren, D6 leitet und übernimmt den sinusförmig abnehmenden Resonanzstrom.

Zeitabschnitt t4-t5 (es gilt Ersatzschaltbild (E), Figur 10)

Die Dioden D3, D6 leiten. Der sekundärseitige Kondensator C5 ist weder über Diode D1 noch über Diode D2 mit der Ausgangsspannung $V_{out}$ verbunden. Das heißt, die momentane Spannung $V_{C5}$ zum Zeitpunkt t = t4 bleibt in diesem Zeitabschnitt konstant:

$$v_{C5}(t) = v_{C5}(t4) = \text{const.} \qquad \text{für } t4 < t \leq t5$$

$$i_{C5}(t) = 0 \qquad \text{für } t4 < t \leq t5.$$

Der sekundärseitige Resonanzstrom fließt während dieses Zeitabschnitts nur durch die untere Wicklung (zweite Sekundärwicklung 316) L6. Die erste Hälfte der Schaltperiode endet bei t = t5 mit dem Umschalten des primärseitigen Invertes.

Für den hier betrachteten Arbeitspunkt bei $V_{out}$ = 250 V ist die Leitbedingung für die Dioden-Kombination D3, D6 für eine positive Eingangsspannung $V_{in}$ = 400 V für etwa 50% der betrachteten halben Schaltperiode erfüllt. Das heißt für die hier vorliegende (vergleichsweise) niedere Ausgangsspannung fließt der entsprechend erhöhte sekundärseitige Resonanzstrom, welcher gleichgerichtet dem Laststrom am Ausgang entspricht, in etwa zu gleichen Teilen über den Kondensator C5 (42 $A_{RMS}$) und über die Mittelpunktabzapfung des Transformators über L6 (57 $A_{RMS}$).

Es sei hier darauf hingewiesen, dass die entsprechenden Spannungen und Ströme insbesondere im Hinblick auf die konkreten Werte nur als beispielhaft anzusehen sind.

Allgemein kann man sagen, dass die Spannungswandlerschaltung typischerweise bei deutlich unterschiedlichen Ausgangsspannungen betrieben wird, nämlich beispielsweise bei einer ersten, vergleichsweise höheren Ausgangsspannung und bei einer zweiten, vergleichsweise niedrigeren Ausgangsspannung. Ein Verhältnis zwischen der höheren der Ausgangsspannungen und der niedrigeren der Ausgangsspannungen kann beispielsweise zumindest 1,2 oder zumindest 1,3 oder zumindest 1,5 betragen.

Durch entsprechende fachmännische Anpassungen ist die Schaltung im Übrigen auch bei deutlich niedrigeren Ausgangsspannungen oder auch bei deutlich höheren Ausgangsspannungen verwendbar.

Auch die Stromwerte sind hier nur als Beispiele anzusehen, da die Schaltung naturgemäß auch für deutlich kleinere Ströme oder für deutlich größere Ströme einsetzbar ist.

Je nach Dimensionierung, Eingangsspannung und ausgangsseitiger Belastung können sich die Zeitverläufe im Übrigen auch verschieben. Typischerweise ist es aber so, dass bei einer vergleichsweisen höheren Ausgangsspannung während eines größeren Zeitanteils ein Strom durch beide Sekundärwicklungen fließt als bei einer vergleichsweise kleineren Ausgangsspannung, so dass sich das effektive Spannungs-ÜbersetzungsVerhältnis bzw. (wichtiger) das Strom-Übersetzungsverhältnis des Transformators an die jeweilige Situation anpasst.

Allgemeine Ausführungen und Schlussfolgerung

Zusammenfassend ist festzuhalten, dass gemäß einem Aspekt der Erfindung durch Hinzufügen einer Mittelanzapfung an einem Transformator und einer zusätzlichen Gleichrichter-Halbbrücke mit Kondensator eine neue Variante eines bisher bekannten LLC-Wandlers entsteht.

Fig. 1 zeigt beispielsweise eine Skizze der vorgeschlagenen Schaltung (Spannungswandlerschaltung 100). Durch entsprechende Dimensionierung der Bauteilwerte können diese so abgestimmt werden, dass die Ausgangsleistung nahezu unabhängig von der Ausgangsspannung ist. Es wurde erkannt, dass hierfür weder eine Phasenverschiebung noch eine Frequenzänderung der primärseitigen H-Brücke (beispielsweise mit Schaltern 104a bis 104d) nötig ist (wobei eine Veränderung der Ansteuerung der H-Brücke natürlich grundsätzlich dennoch möglich ist).

Ein Ergebnis einer Simulation ist beispielsweise in Fig. 2 zu sehen. Bei dieser Simulation wird die Ausgangsspannung V(out) (teilweise auch $V_{out}$ bezeichnet) von 250 V bis 450 V in 50-Volt-Schritten geändert. Die mittlere Ausgangsleistung variiert dabei beispielsweise von 19,5 kW bis 21 kW. Der primärseitige Transformatorstrom I(L2) (teilweise auch als $I_{L2}$ bezeichnet) ist in allen Betriebspunkten offensichtlich nur wenig von seiner idealen Sinusform entfernt. Die Auswertung der Simulation zeigt einen minimalen Effektivstromanstieg von 62 Ampere (450 V) auf 68 Ampere (bei 250 Volt).

Im Folgenden werden mögliche Vorteile und Ausführungsbeispiele der vorliegenden Erfindung erläutert.

a) der primärseitige Effektivwert des Stroms ändert sich bei Anwendung der neuen Topologie in diesem Beispiel um lediglich 10% für einen gesamten Ausgangsspannungsbereich. Die Leitendverluste der primärseitigen Baugruppen (Schalter, Transformator bzw. Trafo, Induktivität, Resonanzkondensator) steigen dadurch lediglich um 20% an. Bei bisher eingesetzten Topologien (zum Beispiel LLC, Phasenverschiebungswandler bzw. Phase-Shift-Wandler) steigt der Effektivwert ca. um einen Faktor 2, was einer Zunahme der Leitendverluste um 400% entspricht. Hieraus ergibt sich ein enormes Einsparpotenzial, da die primärseitigen Komponenten entsprechend schwächer ausgelegt werden können.

b) sekundärseitig ist der zusätzliche Resonanzkreis so ausgelegt, dass bei maximaler Ausgangsspannung die gesamte Ausgangsleistung durch den Kondensator C5 fließen kann, wodurch die maximale Ausgangsspannung erreicht werden kann. Der Mittelabgriff wird in diesem Betriebspunkt nicht verwendet. Der gesamte Strom fließt über alle Sekundärwicklungen.

Bei sinkender Ausgangsspannung nimmt der Stromfluss über dem Mittelabgriff des Transformators zu, da der Kondensator nicht in der Lage ist, den gesamten Strom bei niedriger Ausgangsspannung zu führen (bzw. da der Kondensator so ausgelegt ist, dass der Kondensator nicht in der Lage ist, den gesamten Strom bei niedriger Ausgangsspannung zu führen).

Dieses Verhalten hat Vorteile:

a) Für den Fall der niedrigen Ausgangsspannung und des großen Ausgangsstroms wird der sekundärseitige Strom größtenteils nur durch einen Bruchteil der Sekundärwindungen geführt, was eine effektive Verringerung des ohmschen Widerstands der Sekundärwicklung zur Folge hat.

b) Durch die beschriebene Charakteristik handelt es sich aus Sicht der Primärseite um einen Transformator (Trafo) mit variablen, virtuellen Übersetzungsverhältnis je nach Betriebspunkt, der eine nahezu ideale Stromtransformation ermöglicht.

c) Für den Fall der hohen Ausgangsspannung kann diese auch mit größerem Übersetzungsverhältnis Np/Ns erreicht werden als in einer vergleichbaren, herkömmlichen LLC-Topologie. Dadurch wird bei der hohen Ausgangsspannung der ohmsche Widerstand des Transformators durch die kleinere Windungszahl reduziert.

Weiterhin sei darauf hingewiesen, dass Ausführungsbeispiele gemäß der vorliegenden Erfindung beispielsweise bei galvanisch getrennten Ladegeräten oder bei sonstigen Stromversorgungen eingesetzt werden können.

Zusammenfassend ist festzuhalten, dass Ausführungsbeispiele gemäß der Erfindung einen isolierenden, resonant schaltenden DC/DC-Wandler mit ausgangsspannungsabhängigen, variablen virtuellen Übersetzungsverhältnis schaffen.

## Patentansprüche

1. Eine Spannungswandlerschaltung(100; 300;1100), mit folgenden Merkmalen:

   einem Transformator (110;310;1110) mit zumindest einer Primärwicklung (112;312;1112;L3) und zumindest einer ersten Sekundärwicklung (114;314;1114;15) und einer zweiten Sekundärwicklung (116;316;1116;L6),
   einem Kondensator (120;320;1130;C5), und
   einer Gleichrichteranordnung (150, 154a-154f; 350,354a-354f; 1150; D1, D2, D3, D4, D5, D6);
   wobei der Kondensator in Serie zu der ersten Sekundärwicklung geschaltet ist, um einen Resonanzkreis (114,120;314,320;1130) zu bilden,
   wobei ein erster Anschluss (1120a) des Resonanzkreises, ein Abgriff (140;340;1140), der mit einem zweiten Anschluss (1114b) des Resonanzkreises und mit einem ersten Anschluss (1116a) der zweiten Sekundärwicklung gekoppelt ist, und ein zweiter Anschluss (1116b) der zweiten Sekundärwicklung mit der Gleichrichteranordnung gekoppelt sind, und

wobei die Gleichrichteranordnung ausgelegt ist, um abhängig von über dem Resonanzkreis und über der zweiten Sekundärwicklung und über einer Serienschaltung des Resonanzkreises und der zweiten Sekundärwicklung anliegenden Spannungen ($V_{Leg12}$,$V_{Leg13}$,$V_{Leg23}$) einen Stromfluss zu einem Lastknoten (152a;352a;1160) zu ermöglichen;

**dadurch gekennzeichnet dass:**

die Spannungswandlerschaltung, beispielsweise durch geeignete Wahl der Windungsverhältnisse der Sekundärwicklungen und durch geeignete Wahl des Kondensators, so ausgelegt ist,

dass bei einer ersten Ausgangsspannung zwischen zwei Lastknoten (152a,152b;352a,352b;1150,1162) ein Stromfluss zu einem der Lastknoten, von Nulldurchgängen abgesehen, während einer gesamten Periode einer Anregung durch den Resonanzkreis (114,120;314,320; 1130) erfolgt, und

dass bei einer zweiten Ausgangsspannung zwischen den Lastknoten, die kleiner ist als die erste Ausgangsspannung, ein Stromfluss zu einem der Lastknoten während zumindest 40% einer Periode der Anregung nur durch die zweite der Sekundärwicklungen fließt, oder während zumindest 50% einer Periode der Anregung nur durch eine der Sekundärwicklungen fließt, oder

dass bei einer ersten Ausgangsspannung zwischen zwei Lastknoten ein Stromfluss zu einem der Lastknoten während mehr als 50% einer Periodendauer einer Anregung durch eine Serienschaltung des Resonanzkreises und der zweiten Sekundärwicklung fließt, und dass bei einer zweiten Ausgangsspannung zwischen den Lastknoten, die kleiner als die erste Ausgangsspannung ist, ein Stromfluss während höchstens 30% einer Periodendauer der Anregung durch die Serienschaltung des Resonanzkreises und der zweiten Sekundärwicklung fließt.

2. Spannungswandlerschaltung gemäß Anspruch 1, wobei die Spannungswandlerschaltung so ausgelegt ist,

- dass bei einer ersten Ausgangsspannung zwischen den Lastknoten (152a,152b;352a,352b;1150,1162) ein Stromfluss zu einem der Lastknoten innerhalb einer Periode einer Anregung der Primärwicklung (112;312;1112;L3) zeitweise durch eine Serienschaltung des Resonanzkreises (114,120;314,320; 1130) und der zweiten Sekundärwicklung (116; 316; 1116) fließt, und zeitweise durch den Resonanzkreis und über den Abgriff (140;340;1140) fließt, und

- dass bei einer zweiten Ausgangsspannung zwischen den Lastknoten, die kleiner als die erste Ausgangsspannung ist, ein Stromfluss zu einem der Lastknoten innerhalb einer Periode der Anregung zeitweise durch die Serienschaltung des Resonanzkreises und der zweiten Sekundärwicklung fließt, und zeitweise durch den Resonanzkreis und den Abgriff fließt und zeitweise durch die zweite Sekundärwicklung und den Abgriff fließt.

3. Spannungswandlerschaltung gemäß einem der Ansprüche 1 bis 2, wobei die Spannungswandlerschaltung so ausgelegt ist,

dass bei einer ersten Ausgangsspannung zwischen den Lastknoten (152a,152b;352a,352b;1150,1162) ein Stromfluss zu einem der Lastknoten innerhalb einer Periode einer Anregung für einen längeren Zeitraum durch den Resonanzkreis (114,120;314,320; 1130) erfolgt als bei einer zweiten Ausgangsspannung zwischen den Lastknoten, die kleiner ist als die erste Ausgangsspannung.

4. Spannungswandlerschaltung gemäß einem der Ansprüche 1 bis 3, wobei die Spannungswandlerschaltung so ausgelegt ist,

dass bei einer ersten Ausgangsspannung zwischen den Lastknoten (152a,152b;352a,352b;1150,1162) ein Stromfluss zu einem der Lastknoten, von Nulldurchgängen abgesehen, während einer gesamten Periode einer Anregung durch den Resonanzkreis (114,120;314,320; 1130) erfolgt, und

dass bei einer zweiten Ausgangsspannung zwischen den Lastknoten, die kleiner ist als die erste Ausgangsspannung, ein Stromfluss zu einem der Lastknoten zweitweise durch die zweite Sekundärwicklung (116;316;1116) und den Abgriff (140;340;1140) fließt.

5. Spannungswandlerschaltung gemäß einem der Ansprüche 1 bis 4,

wobei der erste Anschluss (1130a) des Resonanzkreises über ein erstes Gleichrichterelement (154a;354a; D1) mit dem ersten Lastknoten (152a;352a;1160) gekoppelt ist,

wobei der erste Anschluss des Resonanzkreises über ein zweites Gleichrichterelement (154b;354b; D2) mit dem zweiten Lastknoten gekoppelt ist,

wobei der Abgriff (140;340;1140) über ein drittes Gleichrichterelement (154c;354c;D3) mit dem ersten Lastknoten gekoppelt ist,

wobei der Abgriff über ein viertes Gleichrichterelement (154d;354d;D4) mit dem zweiten Lastknoten gekoppelt ist,

wobei der zweite Anschluss (1116b) der zweiten Sekundärwicklung (116;316; 1116) über ein fünftes Gleichrichterelement (154e;354e;D5) mit dem ersten Lastknoten gekoppelt ist,

wobei der zweite Anschluss der zweiten Sekundärwicklung über ein sechstes Gleichrichterelement (154f;354f;D6) mit dem zweiten Lastknoten gekoppelt ist.

6. Spannungswandlerschaltung gemäß einem der Ansprüche 1 bis 5,
wobei ein Verhältnis einer Windungszahl der ersten Sekundärwicklung (114;314;1114) und einer Windungszahl der zweiten Sekundärwicklung (116;316;1116) in einem Bereich zwischen 1 und 2 liegt.

7. Spannungswandlerschaltung gemäß einem der Ansprüche 1 bis 6,
wobei eine Resonanzfrequenz des Resonanzkreises (114,120;314,320; 1130) um zumindest 25% größer als eine Anregungsfrequenz der Primärwicklung ist.

8. Spannungswandlerschaltung gemäß einem der Ansprüche 1 bis 7, wobei die Spannungswandlerschaltung so ausgelegt ist,

dass bei einer ersten Ausgangsspannung während einer Periode einer Anregung ein Stromfluss zu dem Lastknoten (152a;352a;1160)

- zunächst in einer ersten Stromrichtung durch den Resonanzkreis (114,120;314,320; 1130) und über den Abgriff (140;340;1140) fließt,
- dann in der ersten Stromrichtung durch die Serienschaltung des Resonanzkreises und der zweiten Sekundärwicklung (116;316;1116) fließt,
- dann in einer zweiten Stromrichtung, die der ersten Stromrichtung entgegengesetzt ist, durch den Resonanzkreis und über den Abgriff fließt, und
- dann in der zweiten Stromrichtung durch die Serienschaltung des Resonanzkreises und der zweiten Sekundärwicklung fließt; und

dass bei einer zweiten Ausgangsspannung, die kleiner ist als die erste Ausgangsspannung, während einer Periode der Anregung ein Stromfluss zu dem Lastknoten

- zunächst in der zweiten Stromrichtung durch die zweite Sekundärwicklung und über den Abgriff fließt,
- dann in der ersten Stromrichtung durch den Resonanzkreis und über den Abgriff fließt,
- dann in der ersten Stromrichtung durch die Serienschaltung des Resonanzkreises und der zweiten Sekundärwicklung fließt,
- dann in der ersten Stromrichtung durch die zweite Sekundärwicklung und den Abgriff fließt,
- dann in der zweiten Stromrichtung durch den Resonanzkreis und über den Abgriff fließt,
- dann in der zweiten Stromrichtung durch die Serienschaltung des Resonanzkreises und der zweiten Sekundärwicklung fließt, und
- dann in der zweiten Stromrichtung durch die zweite Sekundärwicklung und über den Abgriff fließt.

9. Verfahren zum Betrieb einer Spannungswandlerschaltung (100;300;1100), mit einem Transformator (110;310;1110) mit zumindest einer Primärwicklung (112;312;1112) und zumindest einer ersten Sekundärwicklung (114;314;1114;L5) und einer zweiten Sekundärwicklung (116;316;1116;L6), einem Kondensator (120;320;1120;C5), und einer Gleichrichteranordnung (150, 154a-154f; 350,354a-354f;1150; D1, D2, D3, D4, D5, D6),

wobei der Kondensator in Serie zu der ersten Sekundärwicklung geschaltet ist, um einen Resonanzkreis (114,120;314,320; 1130) zu bilden, wobei ein erster Anschluss des Resonanzkreises, ein Abgriff (140;340;1140), der mit einem zweiten Anschluss des Resonanzkreises und mit einem ersten Anschluss der zweiten Sekundärwicklung gekoppelt ist, und ein zweiter Anschluss der zweiten Sekundärwicklung mit der Gleichrichteranordnung gekoppelt sind,

wobei über die Gleichrichteranordnung abhängig von über dem Resonanzkreis und über der zweiten Sekundärwicklung und über einer Serienschaltung des Resonanzkreises und der zweiten Sekundärwicklung anliegenden Spannungen ($V_{Leg12}$, $V_{Leg13}$, $V_{Leg23}$) ein Stromfluss zu einem Lastknoten (152a;352a;1160) erfolgt;

**dadurch gekennzeichnet dass:**

bei einer ersten Ausgangsspannung zwischen zwei Lastknoten (152a,152b;352a,352b;1150,1162) ein Stromfluss zu einem der Lastknoten, von Nulldurchgängen abgesehen, während einer gesamten Periode einer Anregung durch den Resonanzkreis (114,120;314,320; 1130) erfolgt, und

wobei bei einer zweiten Ausgangsspannung zwischen den Lastknoten, die kleiner ist als die erste Ausgangsspannung, ein Stromfluss zu einem der Lastknoten während zumindest 40% einer Periode der Anregung nur durch die zweite der Sekundärwicklungen fließt, oder während zumindest 50% einer Periode der Anregung nur durch eine der Sekundärwicklungen fließt, oder

dass bei einer ersten Ausgangsspannung zwischen zwei Lastknoten ein Stromfluss zu einem der Lastknoten während mehr als 50% einer Periodendauer einer Anregung durch eine Serienschaltung des Resonanzkreises und der zweiten Sekundärwicklung fließt, und dass bei einer zweiten Ausgangsspannung zwischen den Lastknoten, die kleiner als die erste Ausgangsspannung ist, ein Stromfluss während höchstens 30% einer Periodendauer der Anregung durch die Serienschaltung des Resonanzkreises und der zweiten Sekundärwicklung fließt.

**Claims**

1. A voltage converter circuit (100;300;1100) comprising:

a transformer (110;310;1110) comprising at least one primary winding (112;312;1112;L3) and at least one secondary winding (114;314;1114;15) and a second secondary winding (116;316;1116;L6),
a capacitor (120;320;1130;C5), and
a rectifier arrangement (150, 154a-154f; 350,354a-354f;1150; D1, D2, D3, D4, D5, D6);
wherein the capacitor is connected in series to the first secondary winding so as to form a resonant circuit (114,120;314,320; 1130),
wherein a first terminal (1120a) of the resonant circuit, a tap (140;340;1140) coupled to a second terminal (1114b) of the resonant circuit and to a first terminal (1116a) of the second secondary winding, and a second terminal (1116b) of the second secondary winding are coupled to the rectifier arrangement, and
wherein the rectifier arrangement is configured to enable a current flow to a load node (152a;352a;1160) as a function of voltages ($V_{Leg12}$, $V_{Leg13}$, $V_{Leg23}$) present across the resonant circuit and across the second secondary winding and across a series connection of the resonant circuit and of the second secondary winding;

**characterized in that**:

the voltage converter circuit is configured, for example by means of a suitable choice of the turns ratios of the secondary windings and by means of a suitable choice of the capacitor, such that
when a first output voltage is present between two load nodes (152a,152b;352a,352b;1150,1162), a current flow to one of the load nodes takes place, apart from zero crossings, through the resonant circuit (114,120;314,320; 1130) during an entire period of excitation, and
when a second output voltage, smaller than the first output voltage, is present between the load nodes, a current flow to one of the load nodes flows only through the second one of the secondary windings during at least 40% of a period of excitation, or through one of the secondary windings during at least 50% of a period of excitation, or when a first output voltage is present between two load nodes, a current flow to one of the load nodes flows through a series connection of the resonant circuit and of the second secondary winding during more than 50% of a period of excitation, and when a second output voltage, smaller than the first output voltage, is present between the load nodes, a current flow flows through the series connection of the resonant circuit and of the second secondary winding during at the most 30% of a period of excitation.

2. Voltage converter circuit as claimed in claim 1, the voltage converter circuit being configured such that

when a first output voltage is present between the load nodes (152a,152b;352a,352b;1150,1162), a current flow to one of the load nodes takes place, within a period of excitation of the primary winding (112;312;1112;L3), some of the time through a series connection of the resonant circuit (114,120;314,320; 1130) and of the secondary winding (116;316;1116), and some of the time through the resonant circuit and across the tap (140;340; 1140), and

when a second output voltage, smaller than the first output voltage, is present between the load nodes, a current flow to one of the load nodes takes place, within a period of excitation, some of the time through the series connection of the resonant circuit and of the second secondary winding, and some of the time through the resonant circuit and the tap, and some of the time through the second secondary winding and the tap.

3. Voltage converter circuit as claimed in any of claims 1 to 2, the voltage converter circuit being configured such that when a first output voltage is present between the load nodes (152a,152b;352a,352b;1150,1162), a current flow to one of the load nodes takes place, within a period of excitation through the resonant circuit (114,120;314,320; 1130) for a longer time period than when a second output voltage, smaller than the first output voltage, is present between the load nodes.

4. Voltage converter circuit as claimed in any of claims 1 to 3, the voltage converter circuit being configured such that

when a first output voltage is present between the load nodes (152a,152b;352a,352b;1150,1162), a current flow to one of the load nodes takes place, apart from zero crossings, through the resonant circuit (114,120;314,320; 1130) during an entire period of excitation, and

when a second output voltage, smaller than the first output voltage, is present between the load nodes, a current flow to one of the load nodes takes place some of the time through the second secondary winding (116;316;1116) and the tap (140;340;1140).

5. Voltage converter circuit as claimed in any of claims 1 to 4,

wherein the first terminal (1130a) of the resonant circuit is coupled to the first load node (152a;352a;1160) via a first rectifier element (154a;354a; D1),
wherein the first terminal of the resonant circuit is coupled to the second load node via a second rectifier element (154b;354b; D2),
wherein the tap (140;340;1140) is coupled to the first load node via a third rectifier element (154c;354c;D3),
wherein the tap is coupled to the second load node via a fourth rectifier element (154d;354d;D4),
wherein the second terminal (1116b) of the second secondary winding (116;316;1116) is coupled to the first load node via a fifth rectifier element (154e;354e;D5),
wherein the second terminal of the second secondary winding is coupled to the second load node via a sixth rectifier element (154f;354f;D6).

6. Voltage converter circuit as claimed in any of claims 1 to 5,
wherein a ratio of a number of turns of the first secondary winding (114;314;1114) and a number of turns of the second secondary winding (116;316;1116) ranges between 1 and 2.

7. Voltage converter circuit as claimed in any of claims 1 to 6,
wherein a resonant frequency of the resonant circuit (114,120;314,320; 1130) is larger by at least 25% than an excitation frequency of the primary winding.

8. Voltage converter circuit as claimed in any of claims 1 to 7, the voltage converter circuit being configured such that

when a first output voltage is present, during a period of excitation, a current flow to the load node (152a;352a;1160)

- initially flows, in a first current direction, through the resonant circuit (114,120;314,320; 1130) and across the tap (140;340;1140),
- then flows, in the first current direction, through the series connection of the resonant circuit and of the second secondary winding (116;316;1116),
- then flows, in a second current direction opposed to the first current direction, through the resonant circuit and across the tap, and
- then flows, in the second current direction, through the series connection of the resonant circuit and of the second secondary winding; and

when a second output voltage, smaller than the first output voltage, is present, during a period of excitation, a current flow to the load node

- initially flows, in the second current direction, through the secondary winding and across the tap,
- then flows, in the first current direction, through the resonant circuit and across the tap,
- then flows, in the first current direction, through the series connection of the resonant circuit and of the second secondary winding,
- then flows, in the first current direction, through the second secondary winding and the tap,
- then flows, in the second current direction, through the resonant circuit and across the tap,
- then flows, in the second current direction, through the series connection of the resonant circuit and of the second secondary winding, and
- then flows, in the second current direction, through the second secondary winding and across the tap.

9. Method of operating a voltage converter circuit (100;300;1100),

comprising a transformer (110;310; 1110) comprising at least one primary winding (112;312;1112;L3) and at least one secondary winding (114;314;1114;I5) and a second secondary winding (116;316;1116;L6), a capacitor (120;320;1130;C5), and a rectifier arrangement (150, 154a-154f; 350,354a-354f;1150; D1, D2, D3, D4, D5, D6), wherein the capacitor is connected in series to the first secondary winding so as to form a resonant circuit (114,120;314,320;1130), wherein a first terminal of the resonant circuit, a tap (140;340;1140) coupled to a second terminal of the resonant circuit and to a first terminal of the second secondary winding, and a second terminal of the second secondary winding are coupled to the rectifier arrangement, and wherein a current flow to a load node (152a;352a;1160) takes place via the rectifier arrangement as a function of voltages ($V_{Leg12}$,$V_{Leg13}$,$V_{Leg23}$) present across the resonant circuit and across the second secondary winding and across a series connection of the resonant circuit and of the second secondary winding;

**characterized in that**:

when a first output voltage is present between two load nodes (152a,152b;352a,352b;1150,1162), a current flow to one of the load nodes takes place, apart from zero crossings, through the resonant circuit (114,120;314,320; 1130) during an entire period of excitation, and
wherein, when a second output voltage, smaller than the first output voltage, is present between the load nodes, a current flow to one of the load nodes flows only through the second one of the secondary windings during at least 40% of a period of excitation, or through one of the secondary windings during at least 50% of a period of excitation, or
when a first output voltage is present between two load nodes, a current flow to one of the load nodes flows through a series connection of the resonant circuit and of the second secondary winding during more than 50% of a period of excitation, and when a second output voltage, smaller than the first output voltage, is present between the load nodes, a current flow flows through the series connection of the resonant circuit and of the second secondary winding during at the most 30% of a period of excitation.

## Revendications

1. Circuit convertisseur de tension (100; 300; 1100), aux caractéristiques suivantes:

un transformateur (110; 310; 1110) avec au moins un enroulement primaire (112; 312; 1112; L3) et au moins un premier enroulement secondaire (114; 314; 1114; I5) et un deuxième enroulement secondaire (116; 316; 1116; L6),
un condensateur (120; 320; 1130; C5), et
un aménagement de redresseur (150, 154a à 154f; 350, 354a à 354f; 1150; D1, D2, D3, D4, D5, D6);
dans lequel le condensateur est connecté en série avec le premier enroulement secondaire pour former un circuit de résonance (114, 120; 314, 320; 1130),
dans lequel un premier raccord (1120a) du circuit de résonance, une prise (140; 340; 1140) qui est couplée à un deuxième raccord (1114b) du circuit de résonance et à un premier raccord (1116a) du deuxième enroulement secondaire, et un deuxième raccord (1116b) du deuxième enroulement secondaire sont couplés à l'aménagement de redresseur, et
dans lequel l'aménagement de redresseur est conçu pour permettre, en fonction des tensions ($V_{Leg12}$, $V_{Leg13}$,

$V_{Leg23}$) présentes sur le circuit de résonance et sur le deuxième enroulement secondaire et sur une connexion en série du circuit de résonance et du deuxième enroulement secondaire, un flux de courant vers un nœud de charge (152a; 352a; 1160) ;

**caractérisé par le fait que**:

le circuit convertisseur de tension est conçu, par exemple par un choix approprié des rapports de spires des enroulements secondaires et par un choix approprié du condensateur, de sorte que
à une première tension de sortie entre deux nœuds de charge (152a, 152b; 352a, 352b; 1150, 1162) ait lieu un flux de courant vers l'un des nœuds de charge, à l'exception des passages par zéro, pendant une période complète d'une excitation à travers le circuit de résonance (114, 120; 314, 320; 1130), et
à une deuxième tension de sortie entre les nœuds de charge, qui est inférieure à la première tension de sortie, un flux de courant vers l'un des nœuds de charge ne circule, pendant au moins 40% d'une période de l'excitation, qu'à travers le deuxième des enroulements secondaires, ou ne circule, pendant au moins 50% d'une période de l'excitation, qu'à travers un des enroulements secondaires, ou
à une première tension de sortie entre deux nœuds de charge, un flux de courant vers l'un des nœuds de charge circule, pendant plus de 50% d'une période d'une excitation, à travers un circuit en série du circuit de résonance et du deuxième enroulement secondaire et, à une deuxième tension de sortie entre les nœuds de charge, qui est inférieure à la première tension de sortie, un flux de courant circule, pendant tout au plus 30% d'une période de l'excitation, à travers la connexion en série du circuit de résonance et du deuxième enroulement secondaire.

2. Circuit convertisseur de tension selon la revendication 1, dans lequel le circuit convertisseur de tension est conçu de sorte que

- à une première tension de sortie entre les nœuds de charge (152a, 152b; 352a, 352b; 1150, 1162), un flux de courant vers l'un des nœuds de charge circule pendant une période d'une excitation de l'enroulement primaire (112; 312; 1112; L3) temporairement à travers une connexion en série du circuit de résonance (114, 120; 314, 320; 1130) et du deuxième enroulement secondaire (116; 316; 1116), et circule temporairement à travers le circuit de résonance et à travers la prise (140; 340; 1140), et
- à une deuxième tension de sortie entre les nœuds de charge, qui est inférieure à la première tension de sortie, un flux de courant vers l'un des noeuds de charge circule pendant une période de l'excitation temporairement à travers la connexion en série du circuit de résonance et du deuxième enroulement secondaire, et circule temporairement à travers le circuit de résonance et la prise et circule temporairement à travers le deuxième enroulement secondaire et la prise.

3. Circuit convertisseur de tension selon l'une des revendications 1 à 2, dans lequel le circuit convertisseur de tension est conçu de sorte que
à une première tension de sortie entre les nœuds de charge (152a, 152b; 352a, 352b; 1150, 1162) ait lieu un flux de courant vers l'un des nœuds de charge pendant une période d'une excitation pendant un laps de temps plus long à travers le circuit de résonance (114, 120; 314, 320; 1130) qu'à une deuxième tension de sortie entre les nœuds de charge qui est inférieure à la première tension de sortie.

4. Circuit convertisseur de tension selon l'une des revendications 1 à 3, dans lequel le circuit convertisseur de tension est conçu de sorte que

à une première tension de sortie entre les nœuds de charge (152a, 152b; 352a, 352b; 1150, 1162) ait lieu un flux de courant vers l'un des nœuds de charge, à l'exception des passages par zéro, pendant une période complète d'une excitation à travers le circuit de résonance (114, 120; 314, 320; 1130), et
à une deuxième tension de sortie entre les nœuds de charge, qui est inférieure à la première tension de sortie, un flux de courant vers l'un des nœuds de charge circule à travers le deuxième enroulement secondaire (116; 316; 1116) et la prise (140; 340; 1140).

5. Circuit convertisseur de tension selon l'une des revendications 1 à 4,

dans lequel le premier raccord (1130a) du circuit de résonance est couplé par l'intermédiaire d'un premier élément redresseur (154a; 354a; D1) au premier nœud de charge (152a; 352a; 1160),
dans lequel le premier raccord du circuit de résonance est couplé par l'intermédiaire d'un deuxième élément redresseur (154b; 354b; D2) au deuxième nœud de charge,
dans lequel la prise (140; 340; 1140) est couplée par l'intermédiaire d'un troisième élément redresseur (154c; 354c; D3) au premier nœud de charge,
dans lequel la prise est couplée par l'intermédiaire d'un quatrième élément redresseur (154d; 354d; D4) au deuxième nœud de charge,
dans lequel le deuxième raccord (1116b) du deuxième enroulement secondaire (116; 316; 1116) est couplé par l'intermédiaire d'un cinquième élément redresseur (154e; 354e; D5) au premier nœud de charge,
dans lequel le deuxième raccord du deuxième enroulement secondaire est couplé par l'intermédiaire d'un sixième élément redresseur (154f; 354f; D6) au deuxième nœud de charge.

6. Circuit convertisseur de tension selon l'une des revendications 1 à 5,
dans lequel un rapport entre un nombre de spires du premier enroulement secondaire (114; 314; 1114) et un nombre de spires du deuxième enroulement secondaire (116; 316; 1116) se situe dans une plage comprise entre 1 et 2.

7. Circuit convertisseur de tension selon l'une des revendications 1 à 6,
dans lequel une fréquence de résonance du circuit de résonance (114, 120; 314, 320; 1130) est d'au moins 25% supérieure à une fréquence d'excitation de l'enroulement primaire.

8. Circuit convertisseur de tension selon l'une des revendications 1 à 7, dans lequel le circuit convertisseur de tension est conçu de sorte que

à une première tension de sortie pendant une période d'une excitation, un flux de courant vers le nœud de charge (152a; 352a; 1160)

- circule tout d'abord dans une première direction de circulation à travers le circuit de résonance (114, 120; 314, 320; 1130) et via la prise (140; 340; 1140),
- circule ensuite dans la première direction de circulation à travers la connexion en série du circuit de résonance et du deuxième enroulement secondaire (116; 316; 1116),
- circule ensuite dans une deuxième direction de circulation, opposée à la première direction de circulation, à travers le circuit de résonance et via la prise, et
- circule ensuite dans la deuxième direction de circulation à travers la connexion en série du circuit de résonance et du deuxième enroulement secondaire; et

à une deuxième tension de sortie, qui est inférieure à la première tension de sortie, pendant une période de l'excitation un flux de courant vers le nœud de charge

- circule tout d'abord dans la deuxième direction de circulation à travers le deuxième enroulement secondaire et via la prise,
- circule ensuite dans la première direction de circulation à travers le circuit de résonance et via la prise,
- circule ensuite dans la première direction de circulation à travers la connexion en série du circuit de résonance et du deuxième enroulement secondaire,
- circule ensuite dans la première direction de circulation à travers le deuxième enroulement secondaire et la prise,
circule ensuite dans la deuxième direction de circulation à travers le circuit de résonance et via la prise,
- circule ensuite dans la deuxième direction de circulation à travers la connexion en série du circuit de résonance et du deuxième enroulement secondaire, et
- circule ensuite dans la deuxième direction de circulation à travers le deuxième enroulement secondaire et via la prise.

9. Procédé permettant de faire fonctionner un circuit convertisseur de tension (100; 300; 1100),

avec un transformateur (110; 310; 1110) avec au moins un enroulement primaire (112; 312; 1112) et au moins un premier enroulement secondaire (114; 314; 1114; L5) et un deuxième enroulement secondaire (116; 316; 1116; L6), un condensateur (120; 320; 1120; C5), et un aménagement de redresseur (150, 154a à 154f; 350, 354a à 354f; 1150; D1, D2, D3, D4, D5, D6),
dans lequel le condensateur est connecté en série avec le premier enroulement secondaire pour former un circuit de résonance (114, 120; 314, 320; 1130), dans lequel un premier raccord du circuit de résonance, une prise (140; 340; 1140) qui est connectée à un deuxième raccord du circuit de résonance et est couplée à un premier raccord du deuxième enroulement secondaire, et un deuxième raccord du deuxième enroulement secondaire sont couplés à l'aménagement de redresseur,

dans lequel a lieu par l'intermédiaire de l'aménagement de redresseur, en fonction des tensions ($V_{Leg12}$, $V_{Leg13}$, $V_{Leg23}$) présentes sur le circuit de résonance et sur le deuxième enroulement secondaire et sur une connexion en série du circuit de résonance et du deuxième enroulement secondaire, un flux de courant vers un nœud de charge (152a; 352a; 1160);

**caractérisé par le fait que**:

à une première tension de sortie entre deux nœuds de charge (152a, 152b; 352a, 352b; 1150, 1162) a lieu un flux de courant vers l'un des nœuds de charge, à l'exception des passages par zéro, pendant une période complète d'une excitation à travers le circuit de résonance (114, 120; 314, 320; 1130), et

à une deuxième tension de sortie entre les nœuds de charge, qui est inférieure à la première tension de sortie, un flux de courant vers l'un des nœuds de charge ne circule, pendant au moins 40% d'une période de l'excitation, qu'à travers le deuxième des enroulements secondaires, ou ne circule pendant au moins 50% d'une période de l'excitation qu'à travers un des enroulements secondaires, ou

à une première tension de sortie entre deux nœuds de charge, un flux de courant vers l'un des nœuds de charge circule, pendant plus de 50% d'une période d'une excitation, à travers un circuit en série du circuit de résonance et du deuxième enroulement secondaire et, à une deuxième tension de sortie entre les nœuds de charge, qui est inférieure à la première tension de sortie, un flux de courant circule, pendant tout au plus 30% d'une période de l'excitation, à travers la connexion en série du circuit de résonance et du deuxième enroulement secondaire.

Fig. 1

LÖSUNG DURCH ZUSÄTZLICHE HALBBRÜCKE BEI GLEICHRICHTER

EP 3 656 047 B1

Fig. 2

SIMULATIONSERGEBNIS

Fig. 3

SCHALTBILD FÜR DIE FOLGENDEN ZEITBEREICHSBETRACHTUNGEN

**Fig. 4 (Teil 1)**

VERLÄUFE DER CHARAKTERISTISCHEN GRÖßEN FÜR VOUT = 450 V

EP 3 656 047 B1

Fig. 4 (Teil 2)

VERLÄUFE DER CHARAKTERISTISCHEN GRÖßEN FÜR VOUT = 450 V

EP 3 656 047 B1

**Arbeitspunkt**
- Schaltfrequenz: fsw = 250 kHz
- Ausgangsspannung: Vout = 250 V
- Eingangsspannung: Vin = 400 V
- Ausgangsleistung: Pout = 21,6 kW

# Fig. 5 (Teil 1)
## VERLÄUFE DER CHARAKTERISTISCHEN GRÖßEN FÜR VOUT = 250 V

EP 3 656 047 B1

Fig. 5 (Teil 2)

VERLÄUFE DER CHARAKTERISTISCHEN GRÖßEN FÜR VOUT = 250 V

EP 3 656 047 B1

Fig. 6
ERSATZSCHALTBILD (A)

Fig. 7
ERSATZSCHALTBILD (B)

Fig. 8
ERSATZSCHALTBILD (C)

EP 3 656 047 B1

Fig. 9
ERSATZSCHALTBILD (D)

EP 3 656 047 B1

Fig. 10

ERSATZSCHALTBILD (E)

EP 3 656 047 B1

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090146619 A1

**In der Beschreibung aufgeführte Nicht-Patentliteratur**

- **J. SHKLOVSKI ; K. JANSON.** *Indirect power factor correction method and corresponding sensorless switchmode resonant AC/DC converter*

- **CANALES F.** *A high-power-density DC/DC converter for high-power distributed power systems*